(19) Europäisches Patentamt
European Patent Office
Office européen des brevets

(11) EP 4 564 895 A1

(12) **EUROPEAN PATENT APPLICATION**
published in accordance with Art. 153(4) EPC

(43) Date of publication:
**04.06.2025 Bulletin 2025/23**

(21) Application number: **23845729.5**

(22) Date of filing: **29.07.2023**

(51) International Patent Classification (IPC):
***H04W 24/10*** *(2009.01)*

(52) Cooperative Patent Classification (CPC):
**H04L 5/00; H04W 24/10; H04W 72/0446; H04W 72/20; H04W 72/54**

(86) International application number:
**PCT/CN2023/110057**

(87) International publication number:
**WO 2024/022525 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 CN 202210908434**

(71) Applicant: **Beijing Unisoc Communications Technology Co., Ltd**
**Beijing 100083 (CN)**

(72) Inventor: **WANG, Hualei**
**Beijing 100083 (CN)**

(74) Representative: **Mewburn Ellis LLP**
**Aurora Building**
**Counterslip**
**Bristol BS1 6BX (GB)**

# (54) CHANNEL STATE INFORMATION REPORT TRANSMISSION METHODS AND APPARATUSES, TERMINAL DEVICE AND NETWORK DEVICE

(57) The disclosure discloses a method for transmitting CSI report and apparatus, terminal device, and network device, involving the field of communication technology; the method includes: a terminal device sending a Channel State Information (CSI) report, which is associated with multiple transmission occasions of Channel State Information Reference Signals (CSI-RS); correspondingly, a network device receiving the CSI report. It can be seen that, in order to enhance the related configuration of CSI to adapt to the increasingly complex and diverse communication demands, the disclosure considers multiple CSI-RS transmission occasions, which can be the CSI-RS resources in the time-domain, and makes a CSI report associated with multiple CSI-RS transmission occasions, thereby enhancing the CSI configuration through resource association/resource configuration.

TERMINAL DEVICE

NETWORK DEVICE

S310、CSI REPORT，THE CSI REPORT IS ASSOCIATED WITH MULTIPLE CSI-RS TRANSMISSION OCCASIONS

FIG. 3

EP 4 564 895 A1

Processed by Luminess, 75001 PARIS (FR)

## Description

TECHNICAL FIELD

The disclosure relates to the field of communication technology, particularly to a method and apparatus for transmitting a channel state information (CSI) report, a terminal device, and a network device.

BACKGROUND

The 3rd Generation Partnership Project (3GPP) has introduced channel state information (CSI) in its standard protocols. CSI measurement refers to perform channel measurement and/or interference measurement through channel state information reference signal (CSI-RS) resources to obtain CSI parameters, which are then reported via CSI reports to achieve CSI feedback.

However, the standard protocols specified by the current 3GPP, regarding CSI-related configurations, obtain CSI parameters through channel measurements and/or interference measurements using CSI-RS resources. These CSI parameters may be insufficient when facing increasingly complex and diverse communication demands. Therefore, further research is needed on how to enhance the related configurations of CSI to adapt to these ever more complex and diverse communication requirements.

SUMMARY

The disclosure provides a method and apparatus for transmitting CSI report, terminal device, and network device, aiming to address the issue of enhancing the related configuration of CSI to ensure CSI performance.

In a first aspect, a method for transmitting CSI report is provided, which includes: sending a channel state information (CSI) report, which is associated with multiple CSI reference signals (CSI-RS) transmission occasions.

It can be seen that, in order to enhance the related configuration of CSI to adapt to the increasingly complex and diverse communication needs, in this disclosure, multiple CSI-RS transmission occasions are considered. The CSI-RS transmission occasion can be a CSI-RS resource in the time domain, and allows one CSI report to be associated with multiple CSI-RS transmission occasions, thereby achieving CSI configuration enhancement through resource association/resource configuration.

Since one CSI report is associated with multiple CSI-RS transmission occasions, the terminal device can perform channel measurement and/or interference measurement through these multiple CSI-RS transmission occasions to obtain more/new CSI parameters, and then report these more/new CSI parameters through the one CSI report. Moreover, since more/new CSI parameters will be beneficial to improving the accuracy of assessing downlink channel quality, thereby improving transmission performance and meeting complex and diverse transmission needs. It can be seen that the enhancement of the related configuration of CSI achieved by associating one CSI report with multiple CSI-RS transmission occasions is conducive to adapting to the increasingly complex and diverse communication needs.

In a second aspect, a method for transmitting CSI report is provided, which includes: receiving a CSI report, which is associated with multiple CSI-RS transmission occasions.

In a third aspect, an apparatus for transmitting CSI report is provided, which includes: a sending unit, configured to send a CSI report, which is associated with multiple CSI-RS transmission occasions.

In a fourth aspect, an apparatus for transmitting CSI report is provided, which includes: a receiving unit, configured to receive a CSI report, which is associated with multiple CSI-RS transmission occasions.

In a fifth aspect, the method of the first aspect is applied to a terminal device or within a terminal device.

In a sixth aspect, the method of the second aspect is applied to a network device or within a network device.

In a seventh aspect, a terminal device is provided, which includes a processor, memory, and computer programs or instructions stored on the memory, where the processor is configured to executes the computer programs or instructions to implement the steps of the method of the first aspect.

In an eighth aspect, a network device is provided, which includes a processor, memory, and computer programs or instructions stored on the memory, where the processor is configured to execute the computer programs or instructions to implement the steps of the method of the second aspect.

In a ninth aspect, a chip is provided, which includes a processor and communication interfaces, where the processor is configured to execute the steps of the method of the first or second aspect.

In a tenth aspect, a chip module is provided, which includes a transceiver component and a chip, the chip includes a processor, where the processor is configured to execute the steps of the method of the first or second aspect.

In an eleventh aspect, a computer-readable storage medium is provided, which stores computer programs or instructions, which when executed, implement the steps of the method of the first or second aspect. For example, the computer programs or instructions are executed by a processor.

In a twelfth aspect, a computer program product, which includes computer programs or instructions, which when executed, implement the steps of the method of the first or second aspect. For example, the computer programs or instructions are executed by a processor.

In a thirteenth aspect, a communication system is provided, which includes the terminal device of the seventh aspect and the network device of the eighth aspect.

The beneficial effects of the technical solutions from the second to the thirteenth aspects can refer to the technical effects of the first aspect, and will not be repeated here.

## BRIEF DESCRIPTION OF THE DRAWINGS

To more clearly illustrate the technical solutions in the embodiments of the disclosure, a brief introduction to the drawings used in the description of the embodiments or existing technology is provided below.

Figure 1 is a schematic architecture diagram of a communication system according to an embodiment of the disclosure.

Figure 2 is a structural schematic diagram of a MAC CE according to an embodiment of the disclosure.

Figure 3 is a flowchart of a method for transmitting CSI report according to an embodiment of the disclosure.

Figure 4 is a block diagram of functional units of an apparatus for transmitting CSI report according to an embodiment of the disclosure;

Figure 5 is a block diagram of functional units of an apparatus for transmitting CSI report according to an embodiment of the disclosure.

Figure 6 is a structural schematic diagram of a terminal device according to an embodiment of the disclosure.

Figure 7 is a structural schematic diagram of a network device according to an embodiment of the disclosure.

## DETAILED DESCRIPTION

It should be understood that the terms "first," "second," etc., involved in the embodiments of the disclosure are used to distinguish different objects, not to describe a specific order. In addition, the terms "comprising" and "having," as well as any of their variations, are intended to cover non-exclusive inclusions. For example, a process, method, software, product, or device that includes a series of steps or units is not limited to the listed steps or units, but may also include steps or units not listed, or may also include other steps or units inherent to these processes, methods, products, or devices.

The "embodiments" involved in the embodiments of the disclosure mean that the specific features, structures, or characteristics described in conjunction with the embodiments can be included in at least one embodiment of the disclosure. The phrase appearing in various places in the specification does not necessarily refer to the same embodiment, nor is it mutually exclusive or independent of other embodiments. Those skilled in the art will explicitly and implicitly understand that the embodiments described in the disclosure can be combined with other embodiments.

The "and/or" in the embodiments of the disclosure describes the relationship between associated objects, indicating that there can be three relationships. For example, A and/or B can represent the following three situations: A exists alone, A and B exist simultaneously, and B exists alone. A and B can be singular or plural.

In the embodiments of the disclosure, the symbol "/" can indicate that the associated objects have an "or" relationship. Additionally, the symbol "/" can also represent a division operator, i.e., performing division. For example, A/B can represent A divided by B.

The term "at least one (item)" or similar expressions in the embodiments of the disclosure refers to any combination of these items, including a single item or any combination of multiple items, meaning one or more, where multiple refers to two or more. For example, at least one (item) of a, b, or c can represent the following seven situations: a, b, c, a and b, a and c, b and c, a, b, and c. Each of a, b, and c can be an element or a set containing one or more elements.

The term "equal to" in the embodiments of the disclosure can be used in conjunction with "greater than," applicable to the technical solution adopted when it is greater than, or it can be used with "less than," applicable to the technical solution adopted when it is less than. When "equal to" is used with "greater than," it is not used with "less than"; when "equal to" is used with "less than," it is not used with "greater than."

The terms "of," "corresponding," "relevant," "corresponding," and "indicated" in the embodiments of the disclosure can sometimes be used interchangeably. It should be noted that when their differences are not emphasized, the meanings they express are consistent.

The term "connection" in the embodiments of the disclosure refers to various connection methods, including direct connection or indirect connection, to achieve communication between devices, with no specific limitations.

The term "network" in the embodiments of the disclosure can be expressed as the same concept as "system," and the communication system is the communication network.

The term "size" in the embodiments of the disclosure can be expressed as the same concept as "length."

The term "network" in the embodiments of the disclosure can be expressed as the same concept as "system", and a communication system is a communication network.

The term "number" in the embodiments of the disclosure can be expressed as the same concept as "quantity" or "number."

The term "reporting" in the embodiments of the disclosure can be expressed as the same concept as "reporting" or "feedback." That is, "CSI report" can be expressed as the same concept as "CSI reporting," "CSI feedback," etc.

The term "comprising" in the embodiments of the disclosure can be expressed as the same concept as "carrying" or "bearing."

The term "associated" in the embodiments of the disclosure can be expressed as the same concept as "corresponding" or "mapping."

The term "excluded" in the embodiments of the disclosure can be expressed as the same concept as "ignored," "excluded," "skipped," "canceled," or "released."

Below is an explanation of the relevant content, concepts, meanings, technical problems, technical solutions, and beneficial effects involved in the embodiments of the disclosure.

## I. Communication System, Terminal Device, and Network Device

### 1. Communication System

The technical solution of the disclosure can be applied to various communication systems, such as: general packet radio service (GPRS), long term evolution (LTE) system, advanced long term evolution (LTE-A) system, new radio (NR) system, evolved NR system, LTE-based Access to Unlicensed Spectrum (LTE-U) system, NR-based Access to Unlicensed Spectrum (NR-U) system, non-terrestrial network (NTN) system, universal mobile telecommunication system (UMTS), wireless local area network (WLAN), wireless fidelity (Wi-Fi), 6th-Generation (6G) communication system, or other communication systems.

It should be noted that traditional communication systems support a limited number of connections and are easy to implement. However, with the development of communication technology, communication systems can not only support traditional communication systems but also support device to device (D2D) communication, machine to machine (M2M) communication, machine type communication (MTC), vehicle to vehicle (V2V) communication, vehicle to everything (V2X) communication, narrowband internet of things (NB-IoT) communication, etc., so the technical solution of the disclosure can also be applied to the above communication systems.

In addition, the technical solution of the disclosure can be applied to scenarios such as beamforming, carrier aggregation (CA), dual connectivity (DC), or standalone (SA) deployment.

In the embodiments of the disclosure, the spectrum used for communication between terminal devices and network devices, or between terminal devices, can be licensed spectrum or unlicensed spectrum, with no specific limitations. Additionally, unlicensed spectrum can be understood as shared spectrum, while licensed spectrum can be understood as non-shared spectrum.

Since the disclosure describes various embodiments in conjunction with terminal devices and network devices, the terminal devices and network devices involved will be specifically described below.

### 2. Terminal Device

A terminal device can be a device with transmission and reception functions, also known as a terminal, user equipment (UE), remote UE, relay UE, access terminal, user unit, user station, mobile station, mobile terminal, remote station, mobile device, user terminal, intelligent terminal, wireless communication device, user agent, or user equipment. it should be noted that a relay UE is a terminal device that can provide relay forwarding services for other terminal devices (including Remote UEs).

For example, a terminal device can be a mobile phone, tablet computer (Pad), computer with wireless transmission and reception functions, virtual reality (VR) terminal device, augmented reality (AR) terminal device, wireless terminal in industrial control, wireless terminal in unmanned autonomous driving, wireless terminal in remote medical, wireless terminal in smart grid, wireless terminal in transportation safety, wireless terminal in smart city, or wireless terminal in smart home, etc.

For example, a terminal device can also be a cellular phone, cordless phone, session initiation protocol (SIP) phone, wireless local loop (WLL) station, personal digital assistant (PDA), handheld device with wireless communication functions, computing device, or other processing device connected to a wireless modem, vehicle-mounted equipment, wearable equipment, terminal device in the next-generation communication system (such as NR communication system, 6G communication system), or terminal device in the future evolved public land mobile network (PLMN), etc., with no specific limitations.

In some possible implementations, a terminal device can be deployed on land, including indoors or outdoors, handheld, wearable, or vehicle-mounted; it can be deployed on water surfaces (such as ships); it can be deployed in the air (such as airplanes, balloons, and satellites).

In some possible implementations, a terminal device can include devices with wireless communication functions, such as chip systems, chips, chip modules. For example, the chip system can include a chip, and it can also include other discrete devices.

3. Network Device

A network device can be a device with transmission and reception functions, used for communication with terminal devices.

In some possible implementations, a network device can be responsible for wireless resource management (RRM), quality of service (QoS) management, data compression and encryption, data transmission and reception, etc., on the air interface side.

In some possible implementations, a network device can be a base station (Base Station, BS) in the communication system or a device deployed in the radio access network (RAN) to provide wireless communication functions.

for example, a network device can be an evolved Node B (eNB or eNodeB) in the LTE communication system, a next generation evolved node B (ng-eNB) in the NR communication system, a next generation Node B (gNB) in the NR communication system, a master node (MN) in the dual connectivity architecture, or a secondary node or auxiliary node (SN) in the dual connectivity architecture, etc., with no specific restrictions.

In some possible implementations, a network device can also be a device in the core network (CN), such as access and mobility management function (AMF), user plane function (UPF), etc.; it can also be an access point (AP) in WLAN, relay station, communication device in the future evolved PLMN network, communication device in the NTN network, etc.

In some possible implementations, a network device can include devices that provide wireless communication functions for terminal devices, such as chip systems, chips, chip modules. For example, the chip system can include a chip, or it can include other discrete devices.

In some possible implementations, a network device can communicate with the internet protocol (IP) network. For example, the Internet, private IP networks, or other data networks, etc.

In some possible implementations, a network device can be a single node to implement the above base station functions, or a network device can include two or more independent nodes to implement the above base station functions. For example, a network device includes a centralized unit (CU) and a distributed unit (DU), such as gNB-CU and gNB-DU. Furthermore, in some other embodiments of the disclosure, a network device can also include an active antenna unit (AAU). Among them, the CU implements some functions of the network device, and the DU implements other functions of the network device. For example, the CU is responsible for processing non-real-time protocols and services, and implements the functions of the radio resource control (RRC) layer, service data adaptation protocol (SDAP) layer, and packet data convergence protocol (PDCP) layer. The DU is responsible for processing physical layer protocols and real-time services, and implements the functions of the radio link control (RLC) layer, medium access control (MAC) layer, and physical (PHY) layer. In addition, the AAU can implement some physical layer processing functions, radio frequency processing, and related functions of active antennas. Since the information of the RRC layer will eventually become the information of the PHY layer, or it will be transformed from the information of the PHY layer, therefore, in this network deployment, the higher layer signaling (such as RRC signaling) can be considered to be sent by the DU, or sent by the DU and AAU together. It can be understood that a network device can include at least one of CU, DU, AAU. In addition, the CU can be classified into a network device in the RAN, or the CU can also be classified into a network device in the core network, with no specific restrictions.

In some possible implementations, a network device can be any site in a multi-site that performs coherent joint transmission (CJT) with a terminal device, or other sites outside the multi-site, or other network devices that perform network communication with the terminal device, with no specific restrictions. Among them, multi-site coherent joint transmission can be joint coherent transmission of multiple sites, or different data belonging to the same physical downlink shared channel (PDSCH) are sent from different sites to the terminal device, or multiple sites are virtually combined into one site for transmission, and other names with the same meaning specified in other standards are also applicable to the disclosure, that is, the disclosure does not limit the names of these parameters. The sites in multi-site coherent joint transmission can be remote radio heads (RRHs), transmission and reception points (TRPs), network devices, etc., with no specific restrictions.

In some possible implementations, a network device can be any site in a multi-site that performs non-coherent joint transmission with a terminal device, or other sites outside the multi-site, or other network devices that perform network communication with the terminal device, with no specific restrictions. Among them, multi-site non-coherent joint transmission can be joint non-coherent transmission of multiple sites, or different data belonging to the same PDSCH are sent from different sites to the terminal device, or different data belonging to the same PDSCH are sent from different sites to the terminal device, and other names with the same meaning specified in other standards are also applicable to the disclosure, that is, the disclosure does not limit the names of these parameters. The sites in multi-site non-coherent joint transmission can be RRHs, TRPs, network devices, etc., with no specific restrictions.

In some possible implementations, a network device can have mobility characteristics, for example, a network device can be a mobile device. Optionally, a network device can be a satellite, balloon station. For example, a satellite can be a low earth orbit (LEO) satellite, medium earth orbit (MEO) satellite, geostationary earth orbit (GEO) satellite, high elliptical orbit (HEO) satellite, etc. Optionally, a network device can also be a base station set in locations such as land, water, etc.

In some possible implementations, a network device can provide services for a cell, and the terminal devices in the cell can communicate with the network device through transmission resources (such as spectrum resources). Among them, the cell can be a macro cell, small cell, metro cell, micro cell, pico cell, femto cell, etc.

4. Illustrative Description

Below is an illustrative description of the communication system of the disclosure.

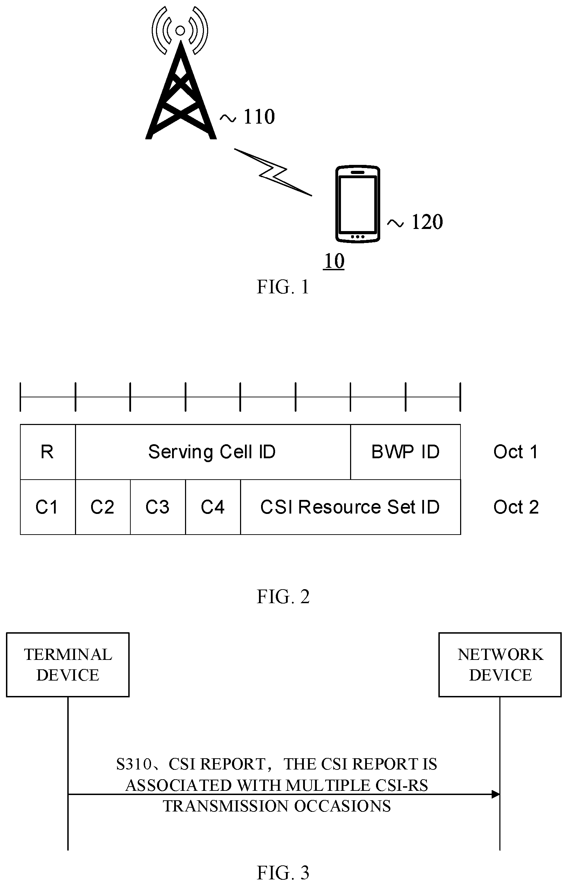

For example, the network architecture of a communication system in an embodiment of the disclosure can refer to Figure 1. As shown in Figure 1, the communication system 10 can include a network device 110 and a terminal device 120. The terminal device 120 can communicate with the network device 110 wirelessly.

Figure 1 is only an example illustration of a network architecture of a communication system, and it does not constitute a limitation on the network architecture of the communication system of the disclosure. For example, in the embodiments of the disclosure, the communication system can also include servers or other devices. For another example, in the embodiments of the disclosure, the communication system can include multiple network devices and/or multiple terminal devices.

II. CSI Reporting Process

The 3GPP has formulated protocol standards that regulate the CSI reporting process.

CSI can be channel state information used by a terminal device to feedback the downlink-channel quality to a network device, that is, a terminal device can feedback the downlink-channel quality to a network device through CSI, so that the network device can select a suitable modulation and coding scheme (MCS) for the transmission of downlink data, reduce the block error rate (BLER) of downlink data transmission, and perform corresponding beam management, mobility management, adaptation tracking, rate matching, and other processing.

1. Related Configuration of CSI

The related configuration of CSI can be defined by the higher layer parameter CSI measurement configuration (CSI-MeasConfig). Among them, CSI-MeasConfig can include the following two higher layer parameters: CSI resource configuration (CSI-ResourceConfig) and CSI report configuration (CSI-ReportConfig).

CSI-ResourceConfig can be used to configure the CSI-RS resources (CSI-RS Resource) for CSI measurement. CSI measurement can be channel measurement and/or interference measurement performed through CSI-RS resources.

CSI-ReportConfig can be used for the configuration of CSI reporting, that is, to configure the CSI report.

Since CSI-ReportConfig will indicate/include the CSI resource configuration identifier (CSI-ResourceConfigId), through the CSI-ResourceConfigId, CSI-ResourceConfig will be associated (corresponding/mapped) with CSI-ReportConfig.

2. CSI-RS Resources

CSI-ResourceConfig can configure a resource set (such as ResourceSet), and ResourceSet can include the most basic CSI-RS-Resource.

CSI-RS-Resource can include at least one of the following: non-zero power CSI-RS resource set (NZP-CSI-RS-ResourceSet), CSI interference measurement (CSI-IM) resource set (CSI-IM-ResourceSet), synchronization signal block (SSB) resource set (CSI-SSB-ResourceSet).

NZP-CSI-RS-ResourceSet can be used for channel measurement and/or interference measurement; CSI-IM-ResourceSet can be used for interference measurement; CSI-SSB-ResourceSet can be used for channel measurement.

The resource type (resourceType) in CSI-ResourceConfig can be used to configure the type of CSI-RS resources.

The type of CSI-RS resources can include: periodic CSI-RS resources, semi-persistent CSI-RS resources, aperiodic CSI-RS resources.

3. CSI Report

A CSI report can be transmitted through the physical uplink control channel (PUCCH) or the physical uplink shared channel (PUSCH).

The report configuration type (reportConfigType) in CSI-ReportConfig can be used to configure the type of the CSI report.

The type of the CSI report can include: periodic CSI report, aperiodic CSI report, semi-persistent on PUCCH CSI report, semi-persistent on PUSCH CSI report.

4. Combination of CSI Report Configuration and CSI-RS Resource Configuration

It should be noted that the combination of CSI report configuration and CSI-RS resource configuration is shown in Table 1.

Table 1

| CSI-RS Configuration | Periodic CSI Report | Semi-Persistent CSI Report | Aperiodic CSI Report |
|---|---|---|---|
| Periodic CSI-RS | Non-dynamic activation/triggering ( triggering/activation ) | For those carried on PUCCH, the terminal device activates by receiving an activation command; for those carried on PUSCH, the terminal device triggers by receiving downlink control information (DCI) | Triggered by DCI |
| Semi-Persistent CSI Report | Not supported | For those carried on PUCCH, the terminal device activates by receiving an activation command; for those carried on PUSCH, the terminal device triggers by receiving DCI | Triggered by DCI |
| Aperiodic CSI Report | Not supported | Not supported | Triggered by DCI |

5. Reporting Method of CSI Report

A CSI report can be wideband CSI or subband CSI. Among them, the wideband can be defined as the size of the configured bandwidth part (BWP), and the subband can be defined as a consecutive number $N_{\mathrm{PRB}}^{\mathrm{SB}}$ of physical resource blocks (PRB), and the size of the subband depends on the total number of PRBs in the BWP. The relationship between the total number of PRBs in the BWP and the size of the subband is shown in Table 2.

Table 2

| BWP (PRBs) | Subband Size (PRBs) |
|---|---|
| 24-72 | 4, 8 |
| 73 - 144 | 8, 16 |
| 145 - 275 | 16, 32 |

6. Types of CSI Parameters Included in the CSI Report

A CSI report can include at least one of the following: Layer 1 reference signal received power (L1-RSRP), Layer 1 signal-to-noise and interference ratio (L1-SINR), CSI-related quantities/CSI parameters, etc.

Specifically, CSI-related quantities/CSI parameters can include at least one of the following: CSI reference signal resource indicator (CRI), synchronization signal block resource indicator (SS/PBCH block resource indicator, SSBRI), rank indicator (RI), precoding matrix indicator (PMI), channel quality indicator (CQI), layer indicator (LI), etc.

It should be noted that CRI (or SSBRI) can represent the CSI-RS (or SSB) resource recommended (or selected) by the terminal device. Among them, one CSI-RS (or SSB) resource can represent one beam or antenna direction.

RI can represent the number of layers recommended (or selected) by the terminal device, and the number of layers can determine the codebook. Among them, each number of layers corresponds to a codebook, and a codebook consists of one or more codewords. For example, a codebook with a layer number of 2 or a codebook with a layer number of 1. In addition, in multiple input multiple output (MIMO) technology, the number of layers can be used to represent the number of transmission links between the transmitter and the receiver.

PMI can represent the index of the codeword in the codebook recommended (or selected) by the terminal device, or can represent quantized precoding information. Among them, one codeword corresponds to one precoding matrix. RI and PMI as a whole can represent the number of layers and precoding matrix recommended by the terminal device.

CQI can represent the terminal device's feedback to the network device on the quality of the current channel. Among them, the terminal device needs to calculate the CQI.

III. A CSI Configuration Enhancement Method

In conjunction with the above content, regarding the current related configuration of CSI, CSI parameters are obtained by channel measurement and/or interference measurement through CSI-RS resources, and these CSI parameters may be insufficient when facing increasingly complex and diverse communication demands.

Based on this, in order to enhance the related configuration of CSI to adapt to the increasingly complex and diverse communication demands, the disclosure considers multiple CSI-RS transmission occasions, which can be the CSI-RS resources in the time-domain, and a CSI report is associated with multiple CSI-RS transmission occasions, thereby enhancing the CSI configuration through resource association/resource configuration.

Since one CSI report is associated with multiple CSI-RS transmission occasions, a terminal device can perform channel measurement and/or interference measurement through these multiple CSI-RS transmission occasions to obtain more/new CSI parameters, and then report these more/new CSI parameters through the CSI report. Furthermore, more/new CSI parameters will be beneficial to improving the accuracy of assessing the downlink-channel quality, thereby improving transmission performance and meeting complex and diverse transmission demands. It can be seen that the enhancement of the related configuration of CSI achieved by associating one CSI report with multiple CSI-RS transmission occasions will be beneficial to adapting to the increasingly complex and diverse communication demands.

Below is a specific explanation of the technical solutions, beneficial effects, and concepts involved in the embodiments of the disclosure.

1. CSI-RS Transmission Occasion

It should be noted that the transmission occasion of CSI-RS can be understood as the CSI-RS resources in the time-domain, or the time-domain position of the CSI-RS resources, or the time-domain position associated with/occupied by/related to the CSI-RS, or the moment associated with/occupied by/related to the CSI-RS, or the time unit associated with/occupied by/related to the CSI-RS, or a CSI-RS resource, or a CSI-RS resource at a certain time in the time-domain, or multiple CSI-RS resources at a certain time in the time-domain, etc., with no specific restrictions.

In the embodiments of the disclosure, a time unit can be understood as the communication granularity in the time-domain. For example, a time unit can be a subframe, slot, symbol, or mini slot, etc., with no specific restrictions. That is to say, the time unit mentioned in the disclosure can be one of subframe, slot, symbol, or mini slot.

2. Multiple CSI-RS Transmission Occasions

In the embodiments of the disclosure, in conjunction with the content of "1. CSI-RS Transmission Occasion" above, multiple CSI-RS transmission occasions can include multiple CSI-RS resources with different time-domain positions. It can be understood that each of the multiple CSI-RS resources has a different time-domain position, or in other words, multiple CSI-RS resources corresponding to/occupy/related to different time-domain positions, or CSI-RS resources at different time-domain positions.

It should be noted that multiple CSI-RS resources with different time-domain positions can also be described as one of the following.

Multiple CSI-RS resources with different moments/times/occasions; it can be understood as multiple CSI-RS resources corresponding to/occupy/related to different moments/times/occasions, or in other words, CSI-RS resources transmitted at different moments.

Multiple CSI-RS resources with different time units; it can be understood as multiple CSI-RS resources corresponding to/occupy/related to different time units, or in other words, CSI-RS resources transmitted at different time units; for example, the time unit is a slot, if the first CSI resource is transmitted in slot 1, and the second CSI resource is transmitted in slot 2, then it means that the first CSI resource has slot 1, and the second CSI resource has slot 2.

Different moments/time/time-domain positions correspond to the same CSI-RS resource; it can be understood as that the same CSI-RS resource is repeated multiple times at different moments/time/time-domain positions. And so on.

That is to say, the transmission occasion can be understood as the moment associated with/occupied by/related to the transmission, or the time associated with/occupied by/related to the transmission, or the time unit associated with/occupied by/related to the transmission, or the time-domain position associated with/occupied by/related to the transmission, or the signal corresponding to the moment associated with/occupied by/related to the transmission, or the signal corresponding to the time associated with/occupied by/related to the transmission, or the signal corresponding to the time unit associated with/occupied by/related to the transmission, or the signal corresponding to the time-domain position associated with/occupied by/related to the transmission, etc., with no specific restrictions.

Below, the disclosure mainly takes multiple CSI-RS resources with different time-domain positions as an example for illustration, and the rest can be inferred by analogy.

3. Multiple CSI-RS Resources with Different Time-domain Positions

It should be noted that multiple CSI-RS resources with different time-domain positions can be multiple repetitions of a CSI-RS resource at different time-domain positions (i.e., "Scenario 1"), or it can be multiple CSI-RS resources in the time-domain (i.e., "Scenario 2"). Below is a specific explanation.

Scenario 1:

① Description

In "Scenario 1," multiple CSI-RS resources with different time-domain positions can be multiple repetitions of a CSI-RS resource at different time-domain positions.

It should be noted that multiple repetitions of a CSI-RS resource at different time-domain positions can be understood as the repetition of a CSI-RS in the time-domain, and these repeated CSI-RSs must have different time-domain positions in the time-domain, but they can have the same frequency domain positions in the frequency domain. Among them, the number of repetitions can be 1 time, or more than 1 time, with no specific restrictions.

That is to say, two repeated CSI-RS resources can be understood as these two CSI-RS resources having different time-domain positions in the time-domain, and they can have the same frequency domain positions in the frequency domain.

It should be noted that the repetition mentioned in the disclosure can be considered as the repeated sending of a signal in the time-domain; however, at different time-domain positions, the spatial domain information (such as beams) of the signal can be the same or different, and the disclosure does not make specific restrictions on this.

② One CSI Report Associated with Multiple CSI-RS Transmission Occasions

In specific implementation, the disclosure can configure one CSI-RS resource according to CSI-ResourceConfig, and configure/indicate the repetition times information and/or interval (gap) information of the CSI-RS resource according to higher layer signaling/higher layer parameters, etc.; among them, the higher layer signaling/higher layer parameters can include at least one of RRC signaling, MAC signaling (such as MAC CE), DCI, etc..

Then, multiple repetitions of the CSI-RS resource at different time-domain positions can be determined according to the repetition times information and/or interval information, and there is a time interval between adjacent two repetitions of the CSI-RS resource, thereby determining multiple CSI-RS transmission occasions.

Finally, a CSI report associated with the multiple CSI-RS transmission occasions can be determined according to the association between CSI-ReportConfig and CSI-ResourceConfig.

③ Repetition Times Information

In the embodiments of the disclosure, the repetition times information can be used to indicate the repetition times of the CSI-RS resource in the time-domain.

For example, the CSI-RS resource is repeated 1/2/3/4 times, etc., in the time-domain.

④ Interval Information

In the embodiments of the disclosure, the interval information can be used to indicate the time interval between adjacent repetitions of the CSI-RS resource.

It should be noted that the time interval between adjacent repetitions of the CSI-RS resource can be understood as the time interval between adjacent two repeated CSI-RS resources of the CSI-RS resource repetition.

In some possible implementations, the time interval mentioned in the disclosure can be represented by a time unit.

For example, the time interval can be a certain number of milliseconds, or a certain number of slots, or a certain number of symbols, or a certain number of mini slots, etc., with no specific restrictions.

⑤ One or More Time Intervals

In some possible implementations, the time interval between adjacent repetitions of the CSI-RS resource can be one or more. In other words, the interval information can indicate one or more time intervals.

It should be noted that if the time interval between adjacent repetitions of the CSI-RS resource is one time-interval, it means that the time interval between every adjacent two repeated CSI-RS resources can be the same.

If the time interval between adjacent repetitions of the CSI-RS resource is multiple time intervals, it means that the time interval between every adjacent two repeated CSI-RS resources can be different.

For example, a certain CSI resource is repeated 4 times, and the 4 repeated CSI-RS resources are the first CSI-RS resource, the second CSI-RS resource, the third CSI-RS resource, and the fourth CSI-RS resource, respectively. Among them, the time interval between the first CSI-RS resource and the second CSI-RS resource is t0, the time interval between the second CSI-RS resource and the third CSI-RS resource is t0, and the time interval between the third CSI-RS resource and the fourth CSI-RS resource is t0. That is to say, the interval information indicates one time-interval t0, and the time interval between every adjacent two repeated CSI-RS resources is the same.

Or, the time interval between the first CSI-RS resource and the second CSI-RS resource is t1, the time interval between the second CSI-RS resource and the third CSI-RS resource is t2, the time interval between the third CSI-RS resource and the fourth CSI-RS resource is t3, and t1, t2, and t3 are all different. That is to say, the interval information indicates 4 time intervals (that is, t1, t2, t3, t4), and the time interval between every adjacent two repeated CSI-RS resources is different.

⑥ Indicating one Interval Information from Multiple Candidate Interval Information

In some possible implementations, the time interval between adjacent repetitions of the CSI-RS resource can be one or more indicated from multiple candidate values, and these multiple candidate values can be indicated by multiple candidate interval information.

That is to say, the interval information can be one indicated from multiple candidate interval information, and this interval information can indicate one or more time intervals.

Among them, these multiple candidate interval information can be network configured/indicated, pre-configured, or protocol defined, etc., with no specific restrictions.

For example, taking network configuration as an example, the disclosure can configure multiple candidate interval information through higher layer parameters/RRC signaling (such as CSI-ResourceConfig or CSI-MeasConfig, etc.), and then indicate one from these multiple candidate interval information through MAC signaling (such as MAC CE).

Taking MAC CE indicating one from multiple candidate interval information as an example, as shown in Figure 2, the structure of MAC CE is as follows.

The first byte (i.e., Oct 1) of the MAC CE includes Reserved (R) field, Serving Cell ID field, BWP ID field. The second byte (i.e., Oct 2) of the MAC CE includes the first field (C1), the second field (C2), the third field (C3), the fourth field (C4), CSI Resource Set ID field.

When RRC signaling configures 4 candidate interval information, and C1 in this MAC CE corresponds to the first candidate interval information among the 4 candidate interval information, C2 corresponds to the second candidate interval information, C3 corresponds to the third candidate interval information, and C4 corresponds to the fourth candidate interval information, if the value of Ci (where i is one of 1, 2, 3, 4) is 1, then it indicates that the interval information of a CSI-RS resource included in the CSI-RS resource set corresponding to the CSI Resource Set ID in this MAC CE is the candidate interval information corresponding to Ci.

For another example, taking protocol definition as an example, in this disclosure, multiple candidate interval information can be defined through a protocol, and then indicate one from these multiple candidate interval information through RRC signaling.

For another example, higher layer parameters/RRC signaling (such as CSI-ResourceConfig or CSI-MeasConfig, etc.) configure multiple candidate interval information, and then indicate one from these multiple candidate interval information through DCI.

Scenario 2:

① Description

In "Scenario 2," multiple CSI-RS resources with different time-domain positions can be multiple CSI-RS resources in the time-domain.

It should be noted that multiple CSI-RS resources in the time-domain can be understood as these CSI-RS resources must have different time-domain positions in the time-domain, but they can have the same frequency domain positions in the frequency domain, or they can have different frequency domain positions, with no specific restrictions.

That is to say, these multiple CSI-RS resources are different in the time-domain, but they can be the same or different in the frequency domain.

② One CSI Report Associated with Multiple CSI-RS Transmission Occasions

In specific implementation, in this disclosure, multiple CSI-RS resources in the time-domain can be configured according to CSI-ResourceConfig, thereby determining multiple CSI-RS transmission occasions; finally, a CSI report associated with these multiple CSI-RS transmission occasions can be determined according to the association between CSI-ReportConfig and CSI-ResourceConfig.

4. More/New CSI Parameters in the CSI Report

In conjunction with the content of "6. Types of CSI Parameters Included in the CSI Report" above, the CSI parameters mentioned in the disclosure can include at least one of L1-RSRP, L1-SINR, CSI-related quantities, etc., and CSI-related quantities can include at least one of CRI, SSBRI, RI, PMI, CQI, LI, etc.

Since one CSI report is associated with multiple CSI-RS transmission occasions in the disclosure, the terminal device can perform channel measurement and/or interference measurement through these multiple CSI-RS transmission occasions to obtain more/new CSI parameters, and then report these more/new CSI parameters through one CSI report.

In some possible implementations, the CSI report can include at least one of the following: predicted CSI parameters, multiple sets of CSI parameters, time-domain channel property information (TDCP).

It should be noted that at least one of the predicted CSI parameters, multiple sets of CSI parameters, and time-domain channel data information can be included in the "CSI-related quantities/CSI parameters" mentioned in the above "6. Types of CSI Parameters Included in the CSI Report."

That is to say, CSI-related quantities/CSI parameters can include at least one of the following: CRI, SSBRI, RI, PMI, CQI, LI, predicted CSI parameters, multiple sets of CSI parameters, TDCP, etc.

Below is a specific explanation for each.

1) Predicted CSI Parameters

It should be noted that currently, regarding CSI measurement, a terminal device performs channel measurement and/or interference measurement through a CSI-RS resource at a certain time-domain position to obtain CSI parameters, but the terminal device will not predict the CSI parameters after this time-domain position.

Since one CSI report is associated with multiple CSI-RS transmission occasions in the disclosure, a terminal device can predict the CSI parameters corresponding to one or more time/moments/time units/transmission occasions after these multiple CSI-RS transmission occasions, and these CSI parameters can be regarded as the CSI parameters predicted by the terminal device.

For example, the terminal device performs CSI measurement through these multiple CSI-RS transmission occasions to obtain channel information or CSI parameters, and then performs interpolation operation on these channel information or CSI parameters to obtain the channel matrix H corresponding to one or more time/moments/time units/transmission occasions after these multiple CSI-RS transmission occasions, and finally processes the channel matrix H to obtain the predicted CSI parameters.

Among them, channel information can include at least one of the following: channel matrix $H$, equivalent channel matrix, precoding matrix $W$ (precoding matrix $W$ can be derived from channel matrix H), right singular vector V of channel matrix H, eigenvector $v_i$ of square matrix $H^TH$ (eigenvector of a matrix obtained by multiplying the conjugate transpose $H^T$ of channel matrix *H by* channel matrix H), vector related to channel matrix $H$ (such as a vector in a certain transformation of channel matrix H, etc.).

In summary, the predicted CSI parameters can be the CSI parameters corresponding to one or more time/-moments/time units/transmission occasions after these multiple CSI-RS transmission occasions.

2) Multiple Sets of CSI Parameters

It should be noted that currently, regarding CSI measurement, a terminal device performs channel measurement and/or interference measurement through a CSI-RS resource at a certain time-domain position to obtain CSI parameters, and these CSI parameters can be regarded as a set of CSI parameters.

Since one CSI report of the disclosure is associated with multiple CSI-RS transmission occasions, the terminal device can perform CSI measurement through these multiple CSI-RS transmission occasions to obtain CSI parameters, and these CSI parameters can be regarded as multiple sets of CSI parameters.

In summary, multiple sets of CSI parameters can be the CSI parameters corresponding to multiple CSI-RS transmission occasions.

In some possible implementations, a set of CSI parameters can correspond to one CSI-RS transmission occasion, or it can correspond to multiple CSI-RS transmission occasions, with no specific restrictions. Among them, one set of CSI parameters corresponding to one CSI-RS transmission occasion can be understood as this set of CSI parameters is obtained through the CSI measurement performed by the terminal device through this one CSI-RS transmission occasion, and the rest can be inferred by analogy.

In some possible implementations, multiple sets of CSI parameters can correspond to one CSI-RS transmission occasion, or they can correspond to multiple CSI-RS transmission occasions, with no specific restrictions. Among them, multiple sets of CSI parameters corresponding to one CSI-RS transmission occasion can be understood as these multiple sets of CSI parameters are obtained by the terminal device through the CSI measurement on this one CSI-RS transmission occasion, and the rest can be inferred by analogy.

3) Time-Domain Channel Property Information

In the embodiments of the disclosure, time-domain channel property information can represent the variation characteristics of the channel in the time-domain, or it can represent the time-domain characteristics of the channel, etc.

It should be noted that the time-domain channel property information can be determined according to these multiple CSI-RS transmission occasions.

In some possible implementations, time-domain channel property information can include at least one of the following: Doppler shift, Doppler spread, cross-correlation in time, relative Doppler shift, differential Doppler shift, Doppler domain vector, Doppler domain codebook/codeword, time-domain vector, time-domain codebook/codeword, etc.

5. How to Determine a CSI Report Associated with Multiple CSI-RS Transmission Occasions

It should be noted that in the disclosure, a CSI report associated with multiple CSI-RS transmission occasions can be determined according to network configuration, network indication, pre-configuration, protocol provisions, etc.

Taking network configuration as an example, the disclosure can determine a CSI report associated with multiple CSI-RS transmission occasions according to higher layer parameters/configuration information/higher layer signaling, etc.

Furthermore, taking higher layer parameters or configuration information including CSI-ReportConfig and CSI-ResourceConfig as an example, the disclosure can determine a CSI report associated with multiple CSI-RS transmission occasions according to the association between CSI-ReportConfig and CSI-ResourceConfig. Among them, CSI-ReportConfig can be used to configure the CSI report, and CSI-ResourceConfig can be used to configure the CSI-RS transmission occasion.

It can be understood that the disclosure can configure CSI-ReportConfig and CSI-ResourceConfig through higher layer parameters or configuration information, and configure the association between CSI-ReportConfig and CSI-ResourceConfig. Thus, according to this association, it can be determined that a CSI report configured by CSI-ReportConfig will be associated with the CSI-RS transmission occasions configured in the time-domain by CSI-ResourceConfig, so as to enhance the related configuration of CSI through one CSI report associated with multiple CSI-RS transmission occasions.

In specific implementation, the disclosure can specifically explain how to determine a CSI report associated with multiple CSI-RS transmission occasions according to the association between CSI-ReportConfig and CSI-ResourceConfig through the following multiple schemes. It should be noted that the various schemes in these multiple schemes are not necessarily independent of each other, and they can also be combined to obtain a new scheme, and this new scheme also belongs to the scope of protection required by the disclosure, with no specific restrictions and redundant descriptions.

Scheme 1:

It should be noted that "Scheme 1" can be a specific explanation of the above "Scenario 1."

① The association between CSI-ReportConfig and CSI-ResourceConfig

In "Scheme 1," the disclosure can configure the association between CSI-ReportConfig and CSI-ResourceConfig through higher layer parameters or configuration information. Among them, this association can include the following:
One CSI-ReportConfig can be associated with one CSI-ResourceConfig.
This CSI-ResourceConfig can include one CSI-RS Resource Set.
This CSI-RS Resource Set can include one CSI-RS resource.
In this way, the disclosure can implement the above "Scenario 1" to configure one CSI-RS resource according to CSI-ResourceConfig.
In some possible implementations, the codebook type included in this CSI-ReportConfig can be Type 2, or the codebook type included in this CSI-ReportConfig can be related to Type 2.

② One CSI Report Associated with Multiple CSI-RS Transmission Occasions

In conjunction with the content of the above "Scenario 1," the disclosure can configure/indicate the repetition times information and/or interval information of the one CSI-RS resource included in this CSI-RS Resource Set according to higher layer signaling/higher layer parameters/ DCI, etc., thereby determining, according to the repetition times information and/or interval information, multiple repetitions of this one CSI-RS resource at different time-domain positions, and there is a time interval between adjacent two repeated CSI-RS resources, thereby determining multiple CSI-RS transmission occasions.
Finally, according to the association described in "Scheme 1," it is determined that one CSI report configured by this CSI-ReportConfig is associated with these multiple CSI-RS transmission occasions.

③ Multiple CSI-RS Transmission Occasions

It should be noted that, in conjunction with the content of the above "Scenario 1," these multiple CSI-RS transmission occasions can include one CSI-RS resource included in the CSI-RS Resource Set repeated multiple times in the time-domain, and the time interval between adjacent repetitions of this one CSI-RS resource can be the same or different.
Among them, the repetition times of this one CSI-RS resource and/or the time interval between adjacent repetitions of this one CSI-RS resource can be indicated by at least one of RRC signaling, MAC signaling, DCI.
Among them, the time interval between adjacent repetitions of this one CSI-RS resource can be one or more indicated from multiple candidate values.
In summary, the one CSI-RS resource included in the CSI-RS Resource Set of "Scheme 1" can be the "one CSI resource" mentioned in the above "Scenario 1." Therefore, the content of the above "Scenario 1" can be adapted to "Scheme 1," and will not be repeated here.

Scheme 2:

It should be noted that "Scheme 2" can be a specific explanation of the above "Scenario 2."

① The association between CSI-ReportConfig and CSI-ResourceConfig

In "Scheme 2," the disclosure can configure the association between CSI-ReportConfig and CSI-ResourceConfig through higher layer parameters or configuration information. Among them, this association can include the following.
One CSI-ReportConfig can be associated with one CSI-ResourceConfig; the CSI-ResourceConfig can include one CSI-RS Resource Set; the CSI-RS Resource Set can include multiple CSI-RS resources.
Each CSI-RS resource included in this CSI-RS Resource Set has a different time-domain position. In this way, the disclosure can configure multiple CSI-RS resources in the time-domain according to CSI-ResourceConfig as described in the above "Scenario 2".
In some possible implementations, the codebook type included in this CSI-ReportConfig can be Type 2, or the codebook type included in this CSI-ReportConfig can be related to Type 2.

② One CSI Report Associated with Multiple CSI-RS Transmission Occasions

In conjunction with the content of the above "Scenario 2," multiple CSI-RS transmission occasions are determined according to the multiple CSI-RS resources included in this CSI-RS Resource Set.

Finally, according to the association described in "Scheme 2," it is determined that a CSI report configured by this CSI-ReportConfig is associated with these multiple CSI-RS transmission occasions.

③ Multiple CSI-RS Transmission Occasions

As mentioned above, these multiple CSI-RS transmission occasions can include each CSI-RS resource included in this CSI-RS Resource Set.

③ Each CSI-RS resource included in this CSI-RS Resource Set has a different time-domain position

In conjunction with the content of "2. CSI-RS Resources" above, since the type of this CSI-RS Resource Set can include periodic, semi-persistent, aperiodic, etc., each CSI-RS resource included in this CSI-RS Resource Set has a different time-domain position, and there will be different implementation methods due to the different types. Below is a specific explanation.

Method 1:

In some possible implementations, if the type of this CSI-RS Resource Set is periodic, each CSI-RS resource included in this CSI-RS Resource Set has a different time-domain position, which can include: each CSI-RS resource included in this CSI-RS Resource Set has the same period, and each CSI-RS resource has a different offset.

Among them, the offset of each CSI-RS resource can be configured/indicated by the network (such as higher layer parameters/higher layer signaling, etc.) or defined by the protocol.

Among them, network configuration can include at least one of RRC signaling, MAC signaling, DCI. In this way, although each CSI-RS resource has the same period, different offsets are configured for each CSI-RS resource, thereby realizing that each CSI-RS resource has a different time-domain position.

For example, one CSI-ReportConfig is associated with one CSI-ResourceConfig, and this CSI-ResourceConfig includes one CSI-RS Resource Set, which includes 3 CSI-RS resources, namely the first CSI-RS resource, the second CSI-RS resource, and the third CSI-RS resource.

Among them, the offset of the first CSI-RS resource configured by the CSI-ResourceConfig is 1 slot, the offset of the second CSI-RS resource is 2 slots, and the offset of the third CSI-RS resource is 3 slots. In this way, these 3 CSI-RS resources will be at different time-domain positions.

It should be noted that for the definition of the offset, the offset of the periodic CSI-RS resource can be used to determine the time-domain position/time unit, etc. where the periodic CSI-RS resource is transmitted.

The offset of the semi-persistent CSI-RS resource can be used to determine the time-domain position/time unit, etc., where the semi-persistent CSI-RS resource is transmitted.

For example, for periodic/semi-persistent CSI-RS resources, the time-domain position/time unit where the periodic/semi-persistent CSI-RS resource is transmitted satisfies the following:

$$\left(N_{\mathrm{slot}}^{\mathrm{frame},\mu} n_{\mathrm{f}} + n_{\mathrm{s,f}}^{\mu} - T_{\mathrm{offset}}\right) \bmod T_{\mathrm{CSI\text{-}RS}} = 0$$

where $T_{\mathrm{CSI\text{-}RS}}$ represents the period of the periodic/semi-persistent CSI-RS resource; $T_{\mathrm{offset}}$ can represent the offset of the periodic/semi-persistent CSI-RS resource, which can be obtained from higher layer parameters (such as CSI resource periodicity and offset (*CSI-ResourcePeriodicityAndOffset*) or slot configuration (slotConfig)); $N_{\mathrm{slot}}^{\mathrm{frame},\mu}$ represents the number of slots per frame corresponding to the subcarrier spacing configuration $\mu$; $n_{\mathrm{f}}$ represents the system frame number; $n_{\mathrm{s,f}}^{\mu}$ represents the slot number within the frame corresponding to the subcarrier spacing configuration $\mu$.

The offset of the aperiodic CSI-RS resource can be the offset between the time-domain position of the aperiodic CSI-RS resource and the reference time-domain position. Among them, the reference time-domain position can be the time unit (such as a slot) where the PDCCH triggering the aperiodic CSI-RS resource is located, or it can be a fixed time-domain position configured/indicated by the network or defined by the protocol, with no specific restrictions.

In addition, the definition of the offset mentioned here can be applicable/adapted to the "offset" appearing in the following text and the whole text, and will not be repeated here.

Method 2:

In some possible implementations, if the type of this CSI-RS Resource Set is semi-persistent, each CSI-RS resource included in this CSI-RS Resource Set has a different time-domain position, which can include: each CSI-RS resource included in this CSI-RS Resource Set has the same period, and each CSI-RS resource has a different offset.
Among them, the offset of each CSI-RS resource can be configured/indicated by the network (such as higher layer parameters/higher layer signaling, etc.) or defined by the protocol.
Among them, network configuration can include at least one of RRC signaling, MAC signaling, DCI.
In this way, although each CSI-RS resource has the same period, different offsets are configured for each CSI-RS resource, thereby realizing that each CSI-RS resource has a different time-domain position.

Method 3:

In some possible implementations, if the type of this CSI-RS Resource Set is aperiodic, each CSI-RS resource included in this CSI-RS Resource Set has a different time-domain position, which can include: the first CSI-RS resource included in this CSI-RS Resource Set has an offset configured by the network (that is, network configuration) or defined by the protocol, and the rest of the CSI-RS resources included in this CSI-RS Resource Set have time intervals configured by the network or defined by the protocol.
Among them, network configuration can include at least one of RRC signaling, MAC signaling, DCI indication.
That is to say, an offset is configured for the first CSI-RS resource through network configuration or protocol definition, and time intervals are configured for the rest of the CSI-RS resources through the network configuration or protocol definition.
It should be noted that for the "first CSI-RS resource" included in this CSI-RS Resource Set, the definition of the first CSI-RS resource can be the first/earliest appearing CSI-RS resource in the time dimension in this CSI-RS Resource Set, or it can be the CSI-RS resource with the most forward time-domain position in this CSI-RS Resource Set, or it can be the first appearing CSI-RS resource in a default configuration, or it can be the CSI-RS resource with the smallest ID value/index value in this CSI-RS Resource Set, etc., with no specific restrictions.
For the "rest of the CSI-RS resources" included in this CSI-RS Resource Set, these rest CSI-RS resources can be the remaining/rest/other CSI-RS resources except for the first CSI-RS resource.
In this way, according to the above explanation of "offset" and "time interval," multiple CSI-RS resources with different time-domain positions can be realized according to the offset and time interval.
It should be noted that the time interval mentioned here can be understood as the time interval between every two CSI-RS resources among the rest of the CSI-RS resources included in this CSI-RS Resource Set. In addition, the time interval mentioned here can be understood in conjunction with the content of "time interval" in the above "Scenario 1," and will not be repeated here.
For example, the time interval between every two CSI-RS resources can be the same or different.
For another example, the time interval mentioned here can be indicated according to Figure 2.

Scheme 3:

It should be noted that "Scheme 3" can be a specific explanation of the above "Scenario 2."

① The association between CSI-ReportConfig and CSI-ResourceConfig

In "Scheme 3," the disclosure can configure the association between CSI-ReportConfig and CSI-ResourceConfig through higher layer parameters or configuration information. Among them, this association can include the following: one CSI-ReportConfig can be associated with one CSI-ResourceConfig; this CSI-ResourceConfig can include multiple CSI-RS Resource Sets; each of these multiple CSI-RS Resource Sets can include one CSI-RS resource.
The CSI-RS resource included in each CSI-RS Resource Set has a different time-domain position. In this way, the disclosure can implement above "Scenario 2" to configure multiple CSI-RS resources in the time-domain according to CSI-ResourceConfig.
For example, one CSI-ReportConfig is associated with one CSI-ResourceConfig, which includes 3 CSI-RS Resource Sets, namely the first CSI-RS Resource Set, the second CSI-RS Resource Set, and the third CSI-RS Resource Set, and the first CSI-RS Resource Set includes one CSI-RS resource (i.e., the first CSI-RS resource), the second CSI-RS Resource Set includes one CSI-RS resource (i.e., the second CSI-RS resource), and the third CSI-RS Resource Set includes one CSI-RS resource (i.e., the third CSI-RS resource). Among them, the first CSI-RS resource, the second CSI-RS resource, and the third CSI-RS resource have different time-domain positions.
In some possible implementations, the codebook type included in this CSI-ReportConfig can be Type 2, or the codebook type included in this CSI-ReportConfig can be related to Type 2.

② One CSI Report Associated with Multiple CSI-RS Transmission Occasions

In conjunction with the content of the above "Scenario 2," multiple CSI-RS transmission occasions are determined according to the CSI-RS resource included in each CSI-RS Resource Set.
Finally, according to the association described in "Scheme 3," it is determined that a CSI report configured by this CSI-ReportConfig is associated with these multiple CSI-RS transmission occasions.

③ Multiple CSI-RS Transmission Occasions

As mentioned above, these multiple CSI-RS transmission occasions can include the CSI-RS resource included in each CSI-RS Resource Set.

③ Each CSI-RS resource included in a CSI-RS Resource Set has a different time-domain position

In conjunction with the content of "2. CSI-RS Resources" above, since the type of each CSI-RS Resource Set can include periodic, semi-persistent, aperiodic, etc., each CSI-RS resource included in the CSI-RS Resource Set has a different time-domain position, and there will be different implementation methods due to the different types. Below is a specific explanation.

Method a:

In some possible implementations, if the type of each CSI-RS Resource Set is periodic, each CSI-RS resource included in the CSI-RS Resource Set has a different time-domain position, which can include: each CSI-RS resource included in the CSI-RS Resource Set has the same period, and each CSI-RS resource has a different offset.
Among them, the offset of each CSI-RS resource in the CSI-RS Resource Set can be configured/indicated by the network (such as higher layer parameters/higher layer signaling, etc.) or defined by the protocol.
Among them, network configuration can include at least one of RRC signaling, MAC signaling, DCI.
In this way, although each CSI-RS resource included in the CSI-RS Resource Set has the same period, different offsets are configured for each CSI-RS resource in the CSI-RS Resource Set, thereby realizing that each CSI-RS resource included in the CSI-RS Resource Set has a different time-domain position.
For example, one CSI-ReportConfig is associated with one CSI-ResourceConfig that contains three CSI-RS Resource Sets, namely the first CSI-RS Resource Set, the second CSI-RS Resource Set, and the third CSI-RS Resource Set. The first CSI-RS Resource Set contains one CSI-RS resource (i.e., the first CSI-RS resource), the second CSI-RS Resource Set contains one CSI-RS resource (i.e., the second CSI-RS resource), and the third CSI-RS Resource Set contains one CSI-RS resource (i.e., the third CSI-RS resource).
Among them, the CSI-ResourceConfig configures the first CSI-RS resource, the second CSI-RS resource, and the third CSI-RS resource to have the same period; and the CSI-ResourceConfig configures the offset of the first CSI-RS resource to be 1 slot, the offset of the second CSI-RS resource to be 2 slots, and the offset of the third CSI-RS resource to be 3 slots. In this way, the three CSI-RS resources will be at different time-domain positions.

Method b:

In some possible implementations, if the type of the CSI-RS Resource Set is semi-persistent, each CSI-RS resource included in the CSI-RS Resource Set has a different time-domain position, which can include: each CSI-RS resource included in the CSI-RS Resource Set has the same period, and each CSI-RS resource has a different offset.
Among them, the offset of each CSI-RS resource included in the CSI-RS Resource Set can be configured/indicated by the network (such as higher layer parameters/higher layer signaling, etc.) or defined by the protocol.
Among them, network configuration can include at least one of RRC signaling, MAC signaling, DCI.
In this way, although each CSI-RS resource included in the CSI-RS Resource Set has the same period, different offsets are configured for each CSI-RS resource included in the CSI-RS Resource Set, thereby realizing that each CSI-RS resource included in the CSI-RS Resource Set has a different time-domain position.

Method c:

In some possible implementations, if the type of the CSI-RS Resource Set is aperiodic, each CSI-RS resource included in the CSI-RS Resource Set has a different time-domain position, which can include: each CSI-RS resource included in the CSI-RS Resource Set has a different offset configured by the network or defined by the protocol.

Among them, network configuration can include at least one of RRC signaling, MAC signaling, DCI.

That is to say, different offsets are configured for each CSI-RS resource included in the CSI-RS Resource Set through the network configuration or protocol definition. In this way, each CSI-RS resource included in the CSI-RS Resource Set has a different time-domain position.

Scheme 4:

It should be noted that "Scheme 4" can be a specific explanation of the above "Scenario 2."

① The association between CSI-ReportConfig and CSI-ResourceConfig

In "Scheme 4," the disclosure can configure the association between CSI-ReportConfig and CSI-ResourceConfig through higher layer parameters or configuration information. Among them, this association can include the following.

One CSI-ReportConfig can be associated with multiple CSI-ResourceConfigs.

Each CSI-ResourceConfig included in these multiple CSI-ResourceConfigs can include one CSI-RS Resource Set.

In some possible implementations, the codebook type included in each CSI-ReportConfig can all be Type 2, or the codebook type included in this CSI-ReportConfig can be related to Type 2.

② Whether the CSI-RS Resource Set is Configured as a Tracking Reference Signal (TRS)

It should be noted that in "Scheme 4," whether the CSI-RS Resource Set is configured as a TRS may affect the number of CSI-RS resources included in this CSI-RS Resource Set.

In one possible implementation, if the CSI-RS Resource Set is not configured as a TRS, then this CSI-RS Resource Set can include one CSI-RS resource.

Among them, the CSI-RS Resource included in each CSI-RS Resource Set that is not configured as a TRS has a different time-domain position. In this way, the disclosure can configure multiple CSI-RS resources in the time-domain according to CSI-ResourceConfig described in the above "Scenario 2".

In one possible implementation, if the CSI-RS Resource Set is configured as a TRS, then this CSI-RS Resource Set can include multiple CSI-RS resources.

Among them, each CSI-RS resource included in the CSI-RS Resource Set configured as a TRS has a different time-domain position. In this way, the disclosure can configure multiple CSI-RS resources in the time-domain according to CSI-ResourceConfig as described in above "Scenario 2".

For example, one CSI-ReportConfig can be associated with 3 CSI-ResourceConfigs, namely the first CSI-ResourceConfig, the second CSI-ResourceConfig, and the third CSI-ResourceConfig, the first CSI-ResourceConfig is associated with one CSI-RS Resource Set (i.e., the first CSI-RS Resource Set), the second CSI-ResourceConfig is associated with one CSI-RS Resource Set (i.e., the second CSI-RS Resource Set), and the third CSI-ResourceConfig is associated with one CSI-RS Resource Set (i.e., the third CSI-RS Resource Set).

Among them, if the first CSI-RS Resource Set is not configured as a TRS, the second CSI-RS Resource Set is not configured as a TRS, and the third CSI-RS Resource Set is configured as a TRS, then the first CSI-RS Resource Set includes one CSI-RS resource (i.e., the first CSI-RS resource), the second CSI-RS Resource Set includes one CSI-RS resource (i.e., the second CSI-RS resource), and the third CSI-RS Resource Set includes multiple CSI-RS resources.

Therefore, the first CSI-RS resource and the second CSI-RS resource have different time-domain positions; each CSI-RS resource included in the third CSI-RS Resource Set has a different time-domain position.

③ One CSI Report Associated with Multiple CSI-RS Transmission Occasions

In conjunction with the content of the above "Scenario 2," multiple CSI-RS transmission occasions are determined according to the CSI-RS resources included in the CSI-RS Resource Set.

Finally, according to the association described in "Scheme 4," it is determined that a CSI report configured by this CSI-ReportConfig is associated with these multiple CSI-RS transmission occasions.

④ Multiple CSI-RS Transmission Occasions

In some possible implementations, if the CSI-RS Resource Set is not configured as a TRS, then these multiple CSI-RS transmission occasions can include the CSI-RS resource included in each CSI-RS Resource Set that is not configured as a TRS.

In some possible implementations, if the CSI-RS Resource Set is configured as a TRS, then these multiple CSI-RS transmission occasions can include each CSI-RS resource included in the CSI-RS Resource Set configured as a TRS.

6. An Example Illustration of a Method for transmitting CSI report

In conjunction with the above content, below is an example introduction to a method for transmitting CSI report of the embodiments of the disclosure. It should be noted that a network device can be a chip, chip module, or communication module, etc., and a terminal device can be a chip, chip module, or communication module, etc. That is to say, this method is applied to a network device or a terminal device, with no specific restrictions.

As shown in Figure 3, it is a flowchart of a method for transmitting CSI report of the embodiments of the disclosure, which specifically includes the following steps.

S310, the terminal device sends a CSI report, which is associated with multiple transmission occasions of CSI-RS.

Correspondingly, the network device receives this CSI report.

It should be noted that "CSI-RS transmission occasion," "a CSI being associated with multiple CSI-RS transmission occasions," etc., please refer to the above content for details, and will not be repeated here.

It can be seen that, in order to enhance the related configuration of CSI to adapt to the increasingly complex and diverse communication demands, the disclosure considers multiple CSI-RS transmission occasions, which can be the CSI-RS resources in the time-domain, and makes one CSI report associated with multiple CSI-RS transmission occasions, thereby enhancing the CSI configuration through resource association/resource configuration.

Since one CSI report is associated with multiple CSI-RS transmission occasions, a terminal device can perform channel measurement and/or interference measurement through these multiple CSI-RS transmission occasions to obtain more/new CSI parameters, and then report these more/new CSI parameters through this one CSI report. Furthermore, more/new CSI parameters will be beneficial to improving the accuracy of assessing the downlink-channel quality, thereby improving transmission performance and meeting complex and diverse transmission demands. It can be seen that the enhancement of the related configuration of CSI achieved by a CSI report associated with multiple CSI-RS transmission occasions will be beneficial to adapting to the increasingly complex and diverse communication demands.

In some possible implementations, multiple CSI-RS transmission occasions can include multiple CSI-RS resources with different time-domain positions.

It should be noted that in conjunction with the content of "1. CSI-RS Transmission Occasion" and "2. Multiple CSI-RS Transmission Occasions" above, the disclosure can understand the CSI-RS transmission occasion from the time-domain/time dimension, therefore multiple CSI-RS transmission occasions can include multiple CSI-RS resources with different time-domain positions/times/moments/time units, etc. In this way, the disclosure can perform channel measurement and/or interference measurement through multiple CSI-RS resources with different time-domain positions to obtain more/new CSI parameters, so as to improve the accuracy of assessing the downlink-channel quality, thereby improving transmission performance and meeting complex and diverse transmission demands.

In some possible implementations, the CSI report can include at least one of the following: predicted CSI parameters, multiple sets of CSI parameters, time-domain channel property information.

The predicted CSI parameters can be the CSI parameters corresponding to one or more transmission occasions after these multiple CSI-RS transmission occasions.

The multiple sets of CSI parameters can be the CSI parameters corresponding to these multiple CSI-RS transmission occasions.

The time-domain channel property information can be determined according to these multiple CSI-RS transmission occasions.

It should be noted that in conjunction with the content of "4. More/New CSI Parameters in the CSI Report" above, more/new CSI parameters can include at least one of predicted CSI parameters, multiple sets of CSI parameters, or time-domain channel property information, and at least one of predicted CSI parameters, multiple sets of CSI parameters, or time-domain channel property information is beneficial to improving the accuracy of assessing the downlink-channel quality, thereby improving transmission performance and meeting complex and diverse transmission demands.

In some possible implementations, the time-domain channel property information can include at least one of the following: Doppler shift, Doppler spread, cross-correlation in time, relative Doppler shift, differential Doppler shift.

It should be noted that in conjunction with the content of "4. More/New CSI Parameters in the CSI Report" above, the disclosure can realize the representation of the time-domain characteristics of the channel, etc., through Doppler-related information (such as Doppler shift, etc.), so as to improve the accuracy of assessing the downlink-channel quality, thereby improving transmission performance and meeting complex and diverse transmission demands.

In some possible implementations, the CSI report associated with multiple CSI-RS transmission occasions can be determined according to the association between the CSI report configuration and the CSI resource configuration, the CSI report configuration is used to configure the CSI report, and the CSI resource configuration is used to configure the CSI-RS transmission occasions.

It should be noted that in conjunction with the content of "5. How to Determine a CSI Report Associated with Multiple CSI-RS Transmission Occasions" above, the disclosure can configure CSI-ReportConfig and CSI-ResourceConfig through higher layer parameters or configuration information, and configure the association between CSI-ReportConfig and CSI-ResourceConfig. Thus, according to this association, it can be determined that a CSI report configured by CSI-ReportConfig will be associated with the CSI-RS transmission occasions configured in the time-domain by CSI-ResourceConfig, so as to enhance the related configuration of CSI through a CSI report associated with multiple CSI-RS transmission occasions.

In some possible implementations, one CSI report configuration is associated with one CSI resource configuration; one CSI resource configuration includes one CSI-RS Resource Set; one CSI-RS Resource Set includes one CSI-RS resource.

It should be noted that in conjunction with the content of "Scheme 1" above, the disclosure can configure the association between CSI-ReportConfig and CSI-ResourceConfig through higher layer parameters or configuration information, thereby determining a CSI report associated with multiple CSI-RS transmission occasions.

In some possible implementations, multiple CSI-RS transmission occasions can include multiple repetitions of a CSI-RS resource in the time-domain, and the time interval between adjacent repetitions of the CSI-RS resource is the same.

It should be noted that in conjunction with the content of "Scheme 1" above, the disclosure can repeat one CSI-RS resource included in this CSI-RS Resource Set multiple times in the time-domain, and the time interval between adjacent repetitions of this CSI-RS resource is the same, thereby realizing the determination of multiple CSI-RS resources with different time-domain positions.

In some possible implementations, the repetition times of the CSI-RS resource and/or the time interval between adjacent repetitions of the CSI-RS resource can be indicated by at least one of RRC signaling, MAC signaling, or DCI.

It should be noted that in conjunction with the content of "Scheme 1" above, the disclosure can configure/indicate the repetition times and/or time interval through higher layer signaling.

In some possible implementations, the time interval between adjacent repetitions of the CSI-RS resource can be one or more indicated from multiple candidate values.

It should be noted that in conjunction with the content of "Scheme 1" above, the disclosure can indicate one or more time intervals from multiple candidate values, so as to flexibly configure/indicate the time interval between adjacent repetitions of the CSI-RS resource.

In some possible implementations, one CSI report configuration is associated with one CSI resource configuration; one CSI resource configuration includes one CSI-RS Resource Set; one CSI-RS Resource Set includes multiple CSI-RS resources.

It should be noted that in conjunction with the content of "Scheme 2" above, the disclosure can configure the association between CSI-ReportConfig and CSI-ResourceConfig through higher layer parameters or configuration information, thereby determining a CSI report associated with multiple CSI-RS transmission occasions.

In some possible implementations, each CSI-RS resource included in the CSI-RS Resource Set has a different time-domain position; multiple CSI-RS transmission occasions can include each CSI-RS resource included in the CSI-RS Resource Set.

It should be noted that in conjunction with the content of "Scheme 2" above, since each CSI-RS resource included in this CSI-RS Resource Set has a different time-domain position, thereby realizing the determination of multiple CSI-RS resources with different time-domain positions.

In some possible implementations, if the type of the CSI-RS Resource Set is periodic or semi-persistent, then each CSI-RS resource included in the CSI-RS Resource Set has a different time-domain position, which can include: each CSI-RS resource included in the CSI-RS Resource Set has the same period, and each CSI-RS resource has a different offset.

It should be noted that in conjunction with the content of "Method 1" and "Method 2" above, although each CSI-RS resource has the same period, different offsets are configured for each CSI-RS resource, thereby realizing that each CSI-RS resource has a different time-domain position.

In some possible implementations, if the type of the CSI-RS Resource Set is aperiodic, then each CSI-RS resource included in the CSI-RS Resource Set has a different time-domain position, which can include: the first CSI-RS resource included in the CSI-RS Resource Set has an offset configured by the network or defined by the protocol, and the rest of the CSI-RS resources included in the CSI-RS Resource Set have time intervals configured by the network or defined by the protocol.

It should be noted that in conjunction with the content of "Method 3" above, according to the above explanation of "offset" and "time interval," each CSI-RS resource can have a different time-domain position according to the offset and time interval.

In some possible implementations, network configuration includes at least one of RRC signaling, MAC signaling, or DCI.

It should be noted that in conjunction with the content of "Scheme 2" above, the disclosure can realize network configuration through at least one of RRC signaling, MAC signaling, or DCI.

In some possible implementations, one CSI report configuration can be associated with one CSI resource configuration; one CSI resource configuration can include multiple CSI-RS Resource Sets; each CSI-RS Resource Set can include one CSI-RS resource.

It should be noted that in conjunction with the content of "Scheme 3" above, the disclosure can configure the association between CSI-ReportConfig and CSI-ResourceConfig through higher layer parameters or configuration information, thereby determining a CSI report associated with multiple CSI-RS transmission occasions.

In some possible implementations, the CSI-RS resource included in each CSI-RS Resource Set has a different time-domain position; multiple CSI-RS transmission occasions can include the CSI-RS resource included in each CSI-RS Resource Set.

It should be noted that in conjunction with the content of "Scheme 3" above, since the CSI-RS resource included in each CSI-RS Resource Set has a different time-domain position, the disclosure can to configure multiple CSI-RS resources in the time-domain according to CSI-ResourceConfig as described in above "Scenario 2", thereby realizing the determination of multiple CSI-RS resources with different time-domain positions.

In some possible implementations, if the type of each CSI-RS Resource Set is periodic or semi-persistent, then the CSI-RS resource included in each CSI-RS Resource Set has a different time-domain position, which can include: the CSI-RS resource included in each CSI-RS Resource Set has the same period, and the CSI-RS resource has a different offset.

It should be noted that in conjunction with the content of "Method a" and "Method b" above, although the CSI-RS Resource included in each CSI-RS Resource Set has the same period, different offsets are configured for each CSI-RS resource, thereby realizing that the CSI-RS resource included in each CSI-RS Resource Set has a different time-domain position.

In some possible implementations, if the type of each CSI-RS Resource Set is aperiodic, then the CSI-RS resource included in each CSI-RS Resource Set has a different time-domain position, which can include: the CSI-RS resource included in each CSI-RS Resource Set has a different offset configured by the network or defined by the protocol.

It should be noted that in conjunction with the content of "Method c" above, different offsets for the CSI-RS resource included in each CSI-RS Resource Set through the network configuration or protocol definition. In this way, the CSI-RS resource included in each CSI-RS Resource Set has a different time-domain position.

In some possible implementations, one CSI report configuration is associated with multiple CSI resource configurations; each CSI resource configuration includes one CSI-RS Resource Set.

It should be noted that in conjunction with the content of "Scheme 4" above, the disclosure can configure the association between CSI-ReportConfig and CSI-ResourceConfig through higher layer parameters or configuration information, thereby determining a CSI report associated with multiple CSI-RS transmission occasions.

In some possible implementations, if the CSI-RS Resource Set is not configured as a TRS, then the CSI-RS Resource Set can include one CSI-RS resource.

It should be noted that in conjunction with the content of "Scheme 4" above, the CSI-RS Resource included in each CSI-RS Resource Set that is not configured as a TRS has a different time-domain position. In this way, the disclosure can implement the above "Scenario 2" to configure multiple CSI-RS resources in the time-domain according to CSI-ResourceConfig.

In some possible implementations, each CSI-RS resource included in a CSI-RS Resource Set that is not configured as a TRS has a different time-domain position; multiple CSI-RS transmission occasions can include the CSI-RS resource included in each CSI-RS Resource Set that is not configured as a TRS.

It should be noted that in conjunction with the content of "Scheme 4" above, by configuring the CSI-RS resource included in each CSI-RS Resource Set that is not configured as a TRS to have a different time-domain position, multiple CSI-RS resources with different time-domain positions are determined.

In some possible implementations, if the CSI Resource Set is configured as a TRS, then the CSI-RS Resource Set includes multiple CSI-RS resources.

It should be noted that in conjunction with the content of "Scheme 4" above, each CSI-RS resource included in the CSI-RS Resource Set configured as a TRS has a different time-domain position. In this way, the disclosure can implement the above "Scenario 2" to configure multiple CSI-RS resources in the time-domain according to CSI-ResourceConfig.

In some possible implementations, each CSI-RS resource included in the CSI-RS Resource Set configured as a TRS has a different time-domain position; multiple CSI-RS transmission occasions include each CSI-RS resource included in the CSI-RS Resource Set configured as a TRS.

It should be noted that in conjunction with the content of "Scheme 4" above, by configuring each CSI-RS resource included in the CSI-RS Resource Set configured as a TRS to have a different time-domain position, multiple CSI-RS resources with different time-domain positions are determined.

In some possible implementations, the codebook type included in the CSI resource configuration is Type 2.

It should be noted that the disclosure can be adapted to the CSI resource configuration with the codebook type being Type 2.

IV. An Example Illustration of an apparatus for transmitting CSI report

The above mainly introduces the solution of the embodiments of this application from the perspective of the method side. It can be understood that, in order to implement the above functions, terminal devices or network devices include hardware structures and/or software modules for executing each function. Those skilled in the art should easily realize that, in combination with the units and algorithm steps described in the examples of the embodiments disclosed in this article, this application can be implemented in the form of hardware or a combination of hardware and computer software. Whether a function is executed by hardware or by computer software driving hardware depends on the specific application and design constraints of the technical solution. Those skilled in the art can use different methods to implement the described functions for each specific application, but such implementation should not be considered to be beyond the scope of this application.

The embodiments of this application can divide the functional units of terminal devices or network devices according to the above method examples. For example, functional units can be divided corresponding to each function, or two or more functions can be integrated into one processing unit. The above integrated unit can be implemented in the form of hardware, or in the form of a software program module. It should be noted that the division of units in the embodiments of this application is illustrative and is only a logical functional division. There may be other division methods in actual implementation.

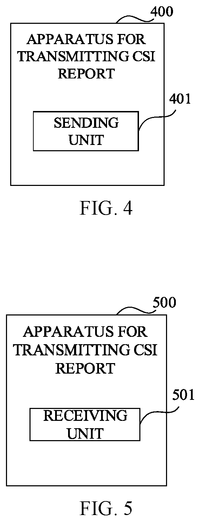

In the case of adopting an integrated unit, Figure 4 is a functional unit composition block diagram of an apparatus for transmitting CSI report according to an embodiment of this application. The apparatus 400 for transmitting CSI report includes: a sending unit 401.

In some possible implementations, the sending unit 401 can be a module unit for processing signals, data, information, etc., and there is no specific limitation on this.

In some possible implementations, the apparatus 400 for transmitting CSI report may also include a storage unit, which is configured to store computer program code or instructions executed by the apparatus 400 for transmitting CSI report. The storage unit can be a memory.

In some possible implementations, the apparatus 400 for transmitting CSI report can be a chip or a chip module.

In some possible implementations, the sending unit 401 can be integrated into other units.

For example, the sending unit 401 can be integrated into a communication unit. It should be noted that the communication unit can be a communication interface, transceiver, transceiver circuit, etc.

In some possible implementations, the sending unit 401 can be a processor or controller, such as a baseband processor, baseband chip, central processing unit (CPU), general-purpose processor, digital signal processor (DSP), application-specific integrated circuit (ASIC), field programmable gate array (FPGA), or other programmable logic devices, transistor logic devices, hardware components, or any combination thereof. It can implement or execute various exemplary logic blocks, modules, and circuits described in combination with the content disclosed in this application. The processing unit can also be a combination that implements computing functions, such as a combination of one or more microprocessors, a combination of DSP and microprocessor, etc.

In some possible implementations, the sending unit 401 is used to perform any step executed by the terminal device/chip/chip module, etc., as described in the above method embodiments, such as sending or receiving data. The following is a detailed description.

Specifically, the sending unit 401 is configured to perform any step in the above method embodiments, and when performing actions such as sending, it can optionally call other units to complete the corresponding operations. The following is a detailed description.

The sending unit 401 is configured to send a CSI report, which is associated with multiple CSI-RS transmission occasions.

It can be seen that, in order to enhance the related configuration of CSI to adapt to the increasingly complex and diverse communication needs, this application considers multiple CSI-RS transmission occasions. The CSI-RS transmission occasion can be a CSI-RS resource in the time-domain, and allows one CSI report to be associated with multiple CSI-RS transmission occasions. Thus, enhancement of CSI configuration can be achieved through resource association/resource configuration.

Since one CSI report is associated with multiple CSI-RS transmission occasions, the terminal device can perform channel measurement and/or interference measurement through these multiple CSI-RS transmission occasions to obtain more/new CSI parameters, and then report these more/new CSI parameters through the one CSI report. Moreover, since more/new CSI parameters will be beneficial to improving the accuracy of assessing downlink-channel quality, thereby improving transmission performance and meeting complex and diverse transmission needs. It can be seen that the enhancement of the related configuration of CSI achieved by associating one CSI report with multiple CSI-RS transmission occasions is conducive to adapting to the increasingly complex and diverse communication needs.

It should be noted that the specific implementation of each operation in the embodiment shown in Figure 4 can be seen in the description of the above method embodiment, and will not be specifically repeated here.

In some possible implementations, multiple CSI-RS transmission occasions can include multiple CSI-RS resources with different time-domain positions.

It should be noted that, in combination with the content of "1. CSI-RS transmission occasion" and "2. Multiple CSI-RS transmission occasions" mentioned above, in this disclosure, the CSI-RS transmission occasion can be understood from the time-domain/time dimension. Therefore, multiple CSI-RS transmission occasions can include multiple CSI-RS resources with different time-domain positions/time/moments/time units, etc. In this way, in this disclosure, channel measurement and/or interference measurement can be performed through multiple CSI-RS resources with different time-domain positions to obtain more/new CSI parameters, so as to improve the accuracy of assessing downlink-channel quality, thereby improving transmission performance and meeting complex and diverse transmission needs.

In some possible implementations, the CSI report can include at least one of the following: predicted CSI parameters, multiple sets of CSI parameters, time-domain channel attribute information.

The predicted CSI parameters can be the CSI parameters corresponding to one or more transmission occasions after multiple CSI-RS transmission occasions. The multiple sets of CSI parameters can be the CSI parameters corresponding to multiple CSI-RS transmission occasions; the time-domain channel attribute information can be determined based on multiple CSI-RS transmission occasions.

It should be noted that, in combination with the content of "4. More/new CSI parameters in the CSI report" mentioned above, more/new CSI parameters can include at least one of predicted CSI parameters, multiple sets of CSI parameters, and time-domain channel attribute information. At least one of predicted CSI parameters, multiple sets of CSI parameters, and time-domain channel attribute information is conducive to improving the accuracy of assessing downlink-channel quality, thereby improving transmission performance and meeting complex and diverse transmission needs.

In some possible implementations, time-domain channel attribute information can include at least one of the following: Doppler shift, Doppler spread, time-domain cross-correlation, relative Doppler shift, differential Doppler shift.

It should be noted that, in combination with the content of "4. More/new CSI parameters in the CSI report" mentioned above, in this disclosure, Doppler-related information (such as Doppler shift) can be used to represent the time-domain characteristics of the channel, etc., so as to improve the accuracy of assessing downlink-channel quality, thereby improving transmission performance and meeting complex and diverse transmission needs.

In some possible implementations, the CSI report being associated with multiple CSI-RS transmission occasions can be determined based on the association between CSI report configuration and CSI resource configuration. The CSI report configuration is used to configure the CSI report, and the CSI resource configuration is used to configure the CSI-RS transmission occasion.

It should be noted that, in combination with the content of "5. How to determine that a CSI report is associated with multiple CSI-RS transmission occasions" mentioned above, the CSI-ReportConfig and CSI-ResourceConfig can be configured through higher-layer parameters or configuration information, and the association between CSI-ReportConfig and CSI-ResourceConfig can also be configured, and thus it can be determined that a CSI report configured by CSI-ReportConfig is associated with CSI-RS transmission occasions configured by CSI-ResourceConfig in the time-domain. This allows the enhancement of the related configuration of CSI by associating one CSI report with multiple CSI-RS transmission occasions.

In some possible implementations, one CSI report configuration is associated with one CSI resource configuration; one CSI resource configuration contains one CSI-RS resource set; one CSI-RS resource set contains one CSI-RS resource.

It should be noted that, in combination with the content of "Scheme 1" mentioned above, the association between CSI-ReportConfig and CSI-ResourceConfig is configured through higher-layer parameters or configuration information, thereby determining that one CSI report is associated with multiple CSI-RS transmission occasions.

In some possible implementations, multiple CSI-RS transmission occasions can include a CSI-RS resource that is repeated multiple times in the time-domain, and the time interval between adjacent repetitions of the CSI-RS resource is the same.

It should be noted that, in combination with the content of "Scheme 1" mentioned above, the CSI-RS resource included in this CSI-RS Resource Set can be repeated multiple times in the time-domain, and the time interval between adjacent repetitions of the CSI-RS resource is the same, thereby realizing the determination of multiple CSI-RS resources with different time-domain positions.

In some possible implementations, the number of repetitions of the CSI-RS resource and/or the time interval between adjacent repetitions of the CSI-RS resource can be indicated by at least one of RRC signaling, MAC signaling, and DCI.

It should be noted that, in combination with the content of "Scheme 1" mentioned above, the number of repetitions and/or time interval can be configured/indicated through higher-layer signaling.

In some possible implementations, the time interval between adjacent repetitions of the CSI-RS resource can be one or more indicated from multiple candidate values.

It should be noted that, in combination with the content of "Scheme 1" mentioned above, one or more time intervals can be indicated from multiple candidate values, so as to flexibly configure/indicate the time interval between adjacent repetitions of the CSI-RS resource.

In some possible implementations, one CSI report configuration is associated with one CSI resource configuration; one CSI resource configuration contains one CSI-RS resource set; one CSI-RS resource set contains multiple CSI-RS resources.

It should be noted that, in combination with the content of "Scheme 2" mentioned above, the association between CSI-ReportConfig and CSI-ResourceConfig can be configured through higher-layer parameters or configuration information, thereby determining that one CSI report is associated with multiple CSI-RS transmission occasions.

In some possible implementations, each CSI-RS resource included in the CSI-RS resource set has a different time-domain position; multiple CSI-RS transmission occasions can include each CSI-RS resource included in the CSI-RS resource set.

It should be noted that, in combination with the content of "Scheme 2" mentioned above, since each CSI-RS resource included in this CSI-RS Resource Set has a different time-domain position, multiple CSI-RS resources with different time-domain positions can be determined.

In some possible implementations, if the type of the CSI-RS resource set is periodic or semi-persistent, each CSI-RS resource included in the CSI-RS resource set having a different time-domain position can include: each CSI-RS resource included in the CSI-RS resource set has the same period, and each CSI-RS resource has a different offset.

It should be noted that, in combination with the content of "Method 1" and "Method 2" mentioned above, although each CSI-RS resource has the same period, by configuring different offsets for each CSI-RS resource, it can be realized that each CSI-RS resource has a different time-domain position.

In some possible implementations, if the type of the CSI-RS resource set is aperiodic, each CSI-RS resource included in the CSI-RS resource set having a different time-domain position can include: the first CSI-RS resource included in the CSI-RS resource set has a network-configured or protocol-defined offset, and the rest of the CSI-RS resources included in the CSI-RS resource set have a network-configured or protocol-defined time interval between them.

It should be noted that, in combination with the content of "Method 3" mentioned above, the explanation of "offset" and "time interval" mentioned above can realize that each CSI-RS resource has a different time-domain position according to the offset and time interval.

In some possible implementations, network configuration includes indication by at least one of RRC signaling, MAC signaling, and DCI.

It should be noted that, in combination with the content of "Scheme 2" mentioned above, network configuration can be indicated by at least one of RRC signaling, MAC signaling, and DCI.

In some possible implementations, one CSI report configuration can be associated with one CSI resource configuration; one CSI resource configuration can contain multiple CSI-RS resource sets; each CSI-RS resource set can contain one CSI-RS resource.

It should be noted that in conjunction with the content of "Scheme 3" above, the association between CSI-ReportConfig and CSI-ResourceConfig can be configured through higher layer parameters or configuration information, thereby determining one CSI report associated with multiple CSI-RS transmission occasions.

In some possible implementations, the CSI-RS resource included in each CSI-RS Resource Set has a different time-domain position; multiple CSI-RS transmission occasions can include the CSI-RS resource included in each CSI-RS Resource Set.

It should be noted that in conjunction with the content of "Scheme 3" above, since the CSI-RS resource included in each CSI-RS Resource Set has a different time-domain position, the disclosure can implement the above "Scenario 2" to configure multiple CSI-RS resources in the time-domain according to CSI-ResourceConfig, thereby realizing the determination of multiple CSI-RS resources with different time-domain positions.

In some possible implementations, if the type of each CSI-RS Resource Set is periodic or semi-persistent, then the CSI-RS resource included in each CSI-RS Resource Set has a different time-domain position, which can include: the CSI-RS resource included in each CSI-RS Resource Set has the same period, and the CSI-RS resource has a different offset.

It should be noted that in conjunction with the content of "Method a" and "Method b" above, although the CSI-RS Resource Set included in each CSI-RS Resource Set has the same period, different offsets are configured for each CSI-RS resource, thereby realizing that the CSI-RS resource included in each CSI-RS Resource Set has a different time-domain position.

In some possible implementations, if the type of each CSI-RS Resource Set is aperiodic, then the CSI-RS resource included in each CSI-RS Resource Set has a different time-domain position, which can include: the CSI-RS resource included in each CSI-RS Resource Set has a different offset configured by the network or defined by the protocol.

It should be noted that in conjunction with the content of "Method c" above, the network configuration or protocol definition is used to configure different offsets for the CSI-RS resource included in each CSI-RS Resource Set. In this way, the CSI-RS resource included in each CSI-RS Resource Set has a different time-domain position.

In some possible implementations, one CSI report configuration is associated with multiple CSI resource configurations; each CSI resource configuration includes one CSI-RS Resource Set.

It should be noted that in conjunction with the content of "Scheme 4" above, the association between CSI-ReportConfig and CSI-ResourceConfig can be configured through higher layer parameters or configuration information, thereby determining one CSI report associated with multiple CSI-RS transmission occasions.

In some possible implementations, if the CSI-RS Resource Set is not configured as a TRS, then the CSI-RS Resource Set can include one CSI-RS resource.

It should be noted that in conjunction with the content of "Scheme 4" above, the CSI-RS Resource included in each CSI-RS Resource Set that is not configured as a TRS has a different time-domain position. In this way, the disclosure can implement the above "Scenario 2" to configure multiple CSI-RS resources in the time-domain according to CSI-ResourceConfig.

In some possible implementations, the CSI-RS resource included in each CSI-RS Resource Set that is not configured as a TRS has a different time-domain position; multiple CSI-RS transmission occasions can include the CSI-RS resource included in each CSI-RS Resource Set that is not configured as a TRS.

It should be noted that in conjunction with the content of "Scheme 4" above, by configuring that the CSI-RS resource included in each CSI-RS Resource Set that is not configured as a TRS has a different time-domain position, multiple CSI-RS resources with different time-domain positions can be determined.

In some possible implementations, if the CSI Resource Set is configured as a TRS, then the CSI-RS Resource Set includes multiple CSI-RS resources.

It should be noted that in conjunction with the content of "Scheme 4" above, each CSI-RS resource included in the CSI-RS Resource Set configured as a TRS has a different time-domain position. In this way, the disclosure can implement the above "Scenario 2" to configure multiple CSI-RS resources in the time-domain according to CSI-ResourceConfig.

In some possible implementations, each CSI-RS resource included in the CSI-RS Resource Set configured as a TRS has a different time-domain position; multiple CSI-RS transmission occasions include each CSI-RS resource included in the CSI-RS Resource Set configured as a TRS.

It should be noted that in conjunction with the content of "Scheme 4" above, by configuring that each CSI-RS resource included in the CSI-RS Resource Set configured as a TRS has a different time-domain position, multiple CSI-RS resources with different time-domain positions can be determined.

In some possible implementations, the codebook type included in the CSI resource configuration is Type 2.

It should be noted that the disclosure can be adapted to the CSI resource configuration with the codebook type being Type 2.

V. Another Example Illustration of an apparatus for transmitting CSI report

In the case of adopting an integrated unit, Figure 5 is a block diagram of functional units of an apparatus for transmitting CSI report of the embodiments of the disclosure. The apparatus 500 for transmitting CSI report includes: a receiving unit 501.

In some possible implementations, the receiving unit 501 can be a module unit used for processing signals, data, information, etc., with no specific restrictions.

In some possible implementations, the apparatus 500 for transmitting CSI report can also include a storage unit, used for storing computer program codes or instructions executed by the apparatus 500 for transmitting CSI report. The storage unit can be a memory.

In some possible implementations, the apparatus 500 for transmitting CSI report can be a chip or a chip module.

In some possible implementations, the receiving unit 501 can be integrated into other units.

For example, the receiving unit 501 can be integrated into a communication unit. It should be noted that the communication unit can be a communication interface, transceiver, receiving and transmitting circuit, etc.

In some possible implementations, the receiving unit 501 can be a processor or controller, for example, it can be a baseband processor, baseband chip, central processing unit (CPU), general-purpose processor, digital signal processor (DSP), application-specific integrated circuit (ASIC), field programmable gate array (FPGA), or other programmable logic devices, transistor logic devices, hardware components, or any combination thereof. It can realize or execute various exemplary logic blocks, modules, and circuits described in conjunction with the content disclosed in the disclosure. The processing unit can also be a combination that realizes computing functions, for example, including one or more microprocessor combinations, DSP and microprocessor combinations, etc.

In some possible implementations, the receiving unit 501 is configured to execute any step executed by the terminal device/chip/chip module, etc., in the above method embodiments, such as sending or receiving data, etc. Below is a detailed explanation.

In specific implementation, the receiving unit 501 is configured to execute any step in the above method embodiments, and when performing actions such as sending, other units can be optionally called to complete the corresponding operations. Below is a detailed explanation.

The receiving unit 501 is used for receiving a CSI report, which is associated with multiple CSI-RS transmission occasions.

It can be seen that, in order to enhance the related configuration of CSI to adapt to the increasingly complex and diverse communication demands, the disclosure considers multiple CSI-RS transmission occasions, which can be the CSI-RS resources in the time-domain, and makes one CSI report associated with multiple CSI-RS transmission occasions, thereby enhancing the CSI configuration through resource association/resource configuration.

Since one CSI report is associated with multiple CSI-RS transmission occasions, a terminal device can perform channel measurement and/or interference measurement through these multiple CSI-RS transmission occasions to obtain more/new CSI parameters, and then report these more/new CSI parameters through this one CSI report. Furthermore, more/new CSI parameters will be beneficial to improving the accuracy of assessing the downlink-channel quality, thereby improving transmission performance and meeting complex and diverse transmission demands. It can be seen that the enhancement of the related configuration of CSI achieved by one CSI report associated with multiple CSI-RS transmission occasions will be beneficial to adapting to the increasingly complex and diverse communication demands.

It should be noted that the specific implementation of each operation in the above embodiment as illustrated in Figure 4 can refer to the corresponding description in the above method embodiment, and will not be specifically repeated here.

In some possible implementations, multiple CSI-RS transmission occasions can include multiple CSI-RS resources with different time-domain positions.

It should be noted that in conjunction with the content of "1. CSI-RS Transmission Occasion" and "2. Multiple CSI-RS Transmission Occasions" above, in the disclosure, the CSI-RS transmission occasion can be understood from the time-domain/time dimension, therefore multiple CSI-RS transmission occasions can include multiple CSI-RS resources with different time-domain positions/times/moments/time units, etc. In this way, the disclosure can perform channel measurement and/or interference measurement through multiple CSI-RS resources with different time-domain positions to obtain more/new CSI parameters, so as to improve the accuracy of assessing the downlink-channel quality, thereby improving transmission performance and meeting complex and diverse transmission demands.

In some possible implementations, the CSI report can include at least one of the following: predicted CSI parameters, multiple sets of CSI parameters, time-domain channel property information.

The predicted CSI parameters can be the CSI parameters corresponding to one or more transmission occasions after these multiple CSI-RS transmission occasions; the multiple sets of CSI parameters can be the CSI parameters corresponding to these multiple CSI-RS transmission occasions; the time-domain channel property information can be determined according to these multiple CSI-RS transmission occasions.

It should be noted that in conjunction with the content of "4. More/New CSI Parameters in the CSI Report" above, more/new CSI parameters can include at least one of predicted CSI parameters, multiple sets of CSI parameters, time-domain channel property information, and at least one of predicted CSI parameters, multiple sets of CSI parameters, time-domain channel property information is beneficial to improving the accuracy of assessing the downlink-channel quality, thereby improving transmission performance and meeting complex and diverse transmission demands.

In some possible implementations, the time-domain channel property information can include at least one of the following: Doppler shift, Doppler spread, cross-correlation in time, relative Doppler shift, differential Doppler shift.

It should be noted that in conjunction with the content of "4. More/New CSI Parameters in the CSI Report" above, the disclosure can realize the representation of the time-domain characteristics of the channel, etc., through Doppler-related information (such as Doppler shift, etc.), so as to improve the accuracy of assessing the downlink-channel quality, thereby improving transmission performance and meeting complex and diverse transmission demands.

In some possible implementations, the CSI report associated with multiple CSI-RS transmission occasions can be determined according to the association between the CSI report configuration and the CSI resource configuration, the CSI report configuration is used to configure the CSI report, and the CSI resource configuration is used to configure the CSI-RS transmission occasion.

It should be noted that in conjunction with the content of "5. How to Determine a CSI Report Associated with Multiple CSI-RS Transmission Occasions" above, CSI-ReportConfig and CSI-ResourceConfig can be configured through higher layer parameters or configuration information, and the association between CSI-ReportConfig and CSI-ResourceConfig is configured. Thus, according to this association, it can be determined that the CSI report configured by CSI-ReportConfig will be associated with the CSI-RS transmission occasions configured in the time-domain by CSI-ResourceConfig, so as to enhance the related configuration of CSI through a CSI report associated with multiple CSI-RS transmission occasions.

In some possible implementations, one CSI report configuration is associated with one CSI resource configuration; one CSI resource configuration includes one CSI-RS Resource Set; one CSI-RS Resource Set includes one CSI-RS resource.

It should be noted that in conjunction with the content of "Scheme 1" above, the association between CSI-ReportConfig and CSI-ResourceConfig can be configured through higher layer parameters or configuration information, thereby determining a CSI report associated with multiple CSI-RS transmission occasions.

In some possible implementations, multiple CSI-RS transmission occasions can include multiple repetitions of a CSI-RS resource in the time-domain, and the time interval between adjacent repetitions of the CSI-RS resource is the same.

It should be noted that in conjunction with the content of "Scheme 1" above, one CSI-RS resource included in this CSI-RS Resource Set can be repeated multiple times in the time-domain, and the time interval between adjacent repetitions of this CSI-RS resource is the same, thereby realizing the determination of multiple CSI-RS resources with different time-domain positions.

In some possible implementations, the repetition times of the CSI-RS resource and/or the time interval between adjacent repetitions of the CSI-RS resource can be indicated by at least one of RRC signaling, MAC signaling, DCI.

It should be noted that in conjunction with the content of "Scheme 1" above, the repetition times and/or time interval can be configured or indicated through higher layer signaling.

In some possible implementations, the time interval between adjacent repetitions of the CSI-RS resource can be one or more indicated from multiple candidate values.

It should be noted that in conjunction with the content of "Scheme 1" above, the disclosure can indicate one or more time intervals from multiple candidate values, so as to flexibly configure/indicate the time interval between adjacent repetitions of the CSI-RS resource.

In some possible implementations, one CSI report configuration is associated with one CSI resource configuration; one CSI resource configuration includes one CSI-RS Resource Set; one CSI-RS Resource Set includes multiple CSI-RS resources.

It should be noted that in conjunction with the content of "Scheme 2" above, the association between CSI-ReportConfig and CSI-ResourceConfig can be configured through higher layer parameters or configuration information, thereby determining one CSI report associated with multiple CSI-RS transmission occasions.

In some possible implementations, each CSI-RS resource included in the CSI-RS Resource Set has a different time-domain position;

Multiple CSI-RS transmission occasions can include each CSI-RS resource included in the CSI-RS Resource Set.

It should be noted that in conjunction with the content of "Scheme 2" above, since each CSI-RS resource included in this CSI-RS Resource Set has a different time-domain position, thereby realizing the determination of multiple CSI-RS resources with different time-domain positions.

In some possible implementations, if the type of the CSI-RS Resource Set is periodic or semi-persistent, then each CSI-RS resource included in the CSI-RS Resource Set has a different time-domain position, which can include:

Each CSI-RS resource included in the CSI-RS Resource Set has the same period, and each CSI-RS resource has a different offset.

It should be noted that in conjunction with the content of "Method 1" and "Method 2" above, although each CSI-RS resource has the same period, different offsets are configured for each CSI-RS resource, thereby realizing that each CSI-RS resource has a different time-domain position.

In some possible implementations, if the type of the CSI-RS Resource Set is aperiodic, then each CSI-RS resource included in the CSI-RS Resource Set has a different time-domain position, which can include: the first CSI-RS resource included in the CSI-RS Resource Set has an offset configured by the network (that is, network configuration) or defined by the protocol, and the rest of the CSI-RS resources included in the CSI-RS Resource Set have time intervals configured by the network or defined by the protocol.

It should be noted that in conjunction with the content of "Method 3" above, according to the above explanation of "offset" and "time interval," each CSI-RS resource can have a different time-domain position according to the offset and time interval.

In some possible implementations, network configuration includes at least one of RRC signaling, MAC signaling, DCI.

It should be noted that in conjunction with the content of "Scheme 2" above, the disclosure can realize network configuration through at least one of RRC signaling, MAC signaling, DCI.

In some possible implementations, one CSI report configuration can be associated with one CSI resource configuration; one CSI resource configuration can include multiple CSI-RS Resource Sets; each CSI-RS Resource Set can include one CSI-RS resource.

It should be noted that in conjunction with the content of "Scheme 3" above, the association between CSI-ReportConfig and CSI-ResourceConfig can be configured through higher layer parameters or configuration information, thereby determining one CSI report associated with multiple CSI-RS transmission occasions.

In some possible implementations, the CSI-RS resource included in each CSI-RS Resource Set has a different time-domain position; multiple CSI-RS transmission occasions can include the CSI-RS resource included in each CSI-RS Resource Set.

It should be noted that in conjunction with the content of "Scheme 3" above, since the CSI-RS resource included in each CSI-RS Resource Set has a different time-domain position, the disclosure can implement the above "Scenario 2" to configure multiple CSI-RS resources in the time-domain according to CSI-ResourceConfig, thereby realizing the determination of multiple CSI-RS resources with different time-domain positions.

In some possible implementations, if the type of each CSI-RS Resource Set is periodic or semi-persistent, then the CSI-RS resource included in each CSI-RS Resource Set has a different time-domain position, which can include: the CSI-RS resource included in each CSI-RS Resource Set has the same period, and the CSI-RS resource has a different offset.

It should be noted that in conjunction with the content of "Method a" and "Method b" above, although the CSI-RS Resource Set included in each CSI-RS Resource Set has the same period, different offsets are configured for each CSI-RS resource, thereby realizing that the CSI-RS resource included in each CSI-RS Resource Set has a different time-domain position.

In some possible implementations, if the type of each CSI-RS Resource Set is aperiodic, then the CSI-RS resource included in each CSI-RS Resource Set has a different time-domain position, which can include: the CSI-RS resource included in each CSI-RS Resource Set has a different offset configured by the network or defined by the protocol.

It should be noted that in conjunction with the content of "Method c" above, the network configuration or protocol definition is used to configure different offsets for the CSI-RS resource included in each CSI-RS Resource Set. In this way, the CSI-RS resource included in each CSI-RS Resource Set has a different time-domain position.

In some possible implementations, one CSI report configuration is associated with multiple CSI resource configurations; each CSI resource configuration includes one CSI-RS Resource Set.

It should be noted that in conjunction with the content of "Scheme 4" above, the association between CSI-ReportConfig and CSI-ResourceConfig can be configured through higher layer parameters or configuration information, thereby determining one CSI report associated with multiple CSI-RS transmission occasions.

In some possible implementations, if the CSI-RS Resource Set is not configured as a TRS, then the CSI-RS Resource Set can include one CSI-RS resource.

It should be noted that in conjunction with the content of "Scheme 4" above, the CSI-RS Resource included in each CSI-RS Resource Set that is not configured as a TRS has a different time-domain position. In this way, the disclosure can implement the above "Scenario 2" to configure multiple CSI-RS resources in the time-domain according to CSI-ResourceConfig.

In some possible implementations, the CSI-RS resource included in each CSI-RS Resource Set that is not configured as a TRS has a different time-domain position; multiple CSI-RS transmission occasions can include the CSI-RS resource included in each CSI-RS Resource Set that is not configured as a TRS.

It should be noted that in conjunction with the content of "Scheme 4" above, by configuring that the CSI-RS resource included in each CSI-RS Resource Set that is not configured as a TRS has a different time-domain position, multiple CSI-RS resources with different time-domain positions can be determined.

In some possible implementations, if the CSI Resource Set is configured as a TRS, then the CSI-RS Resource Set includes multiple CSI-RS resources.

It should be noted that in conjunction with the content of "Scheme 4" above, each CSI-RS resource included in the CSI-RS Resource Set configured as a TRS has a different time-domain position. In this way, the disclosure can implement the above "Scenario 2" to configure multiple CSI-RS resources in the time-domain according to CSI-ResourceConfig.

In some possible implementations, each CSI-RS resource included in the CSI-RS Resource Set configured as a TRS has a different time-domain position; multiple CSI-RS transmission occasions include each CSI-RS resource included in the CSI-RS Resource Set configured as a TRS.

It should be noted that in conjunction with the content of "Scheme 4" above, by configuring that each CSI-RS resource included in the CSI-RS Resource Set configured as a TRS has a different time-domain position, multiple CSI-RS resources with different time-domain positions can be determined.

In some possible implementations, the codebook type included in the CSI resource configuration is Type 2.

It should be noted that the disclosure can be adapted to the CSI resource configuration with the codebook type being Type 2.

VI. An Example Illustration of a Terminal Device

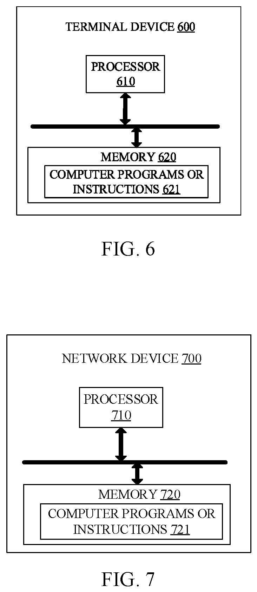

Please refer to Figure 6, Figure 6 is a structural schematic diagram of a terminal device of the embodiments of the disclosure. Among them, the terminal device 600 includes a processor 610, a memory 620, and a communication bus used for connecting the processor 610 and the memory 620.

In some possible implementations, the memory 620 includes but is not limited to random access memory (RAM), read-only memory (ROM), erasable programmable read-only memory (EPROM), or compact disc read-only memory (CD-ROM), and the memory 620 is configured to store the program codes executed by the terminal device 600and data transmitted by the terminal device 600.

In some possible implementations, the terminal device 600 also includes a communication interface, which is used for receiving and sending data.

In some possible implementations, the processor 610 can be one or more central processing units (CPUs), and when the processor 610 is a CPU, the CPU can be a single-core CPU or a multi-core CPU.

In some possible implementations, the processor 610 can be a baseband chip, chip, CPU, general-purpose processor, DSP, ASIC, FPGA, or other programmable logic devices, transistor logic devices, hardware components, or any combination thereof.

In specific implementation, the processor 610 of the terminal device 600 is used to execute the computer program or instruction 621 stored in the memory 620, to perform the following operations: sending a CSI report, which is associated with multiple CSI-RS transmission occasions.

It can be seen that, in order to enhance the related configuration of CSI to adapt to the increasingly complex and diverse communication demands, the disclosure considers multiple CSI-RS transmission occasions, which can be the CSI-RS resources in the time-domain, and makes one CSI report associated with multiple CSI-RS transmission occasions, thereby enhancing the CSI configuration through resource association/resource configuration.

Since one CSI report is associated with multiple CSI-RS transmission occasions, a terminal device can perform channel measurement and/or interference measurement through these multiple CSI-RS transmission occasions to obtain more/new CSI parameters, and then report these more/new CSI parameters through this one CSI report. Furthermore, more/new CSI parameters will be beneficial to improving the accuracy of assessing the downlink-channel quality, thereby improving transmission performance and meeting complex and diverse transmission demands. It can be seen that the enhancement of the related configuration of CSI achieved by a CSI report associated with multiple CSI-RS transmission occasions will be beneficial to adapting to the increasingly complex and diverse communication demands.

It should be noted that the specific implementation of each operation can adopt the corresponding description of the above method embodiment, and the terminal device 600 can be configured to execute the above method embodiment of the disclosure, and will not be repeated here.

IX. An Example Illustration of a Network Device

Please refer to Figure 7, Figure 7 is a structural schematic diagram of a network device provided by the embodiments of the disclosure. Among them, the network device 700 includes a processor 710, a memory 720, and a communication bus used for connecting the processor 710 and the memory 720.

In some possible implementations, the memory 720 includes but is not limited to RAM, ROM, EPROM, or CD-ROM, and the memory 720 is used for storing related instructions and data.

In some possible implementations, the network device 700 also includes a communication interface, which is used for receiving and sending data.

In some possible implementations, the processor 710 can be one or more CPUs, and when the processor 710 is a CPU, the CPU can be a single-core CPU or a multi-core CPU.

In some possible implementations, the processor 710 can be a baseband chip, chip, CPU, general-purpose processor, DSP, ASIC, FPGA, or other programmable logic devices, transistor logic devices, hardware components, or any combination thereof.

In some possible implementations, the processor 710 of the network device 700 is configured to execute the computer program or instruction 721 stored in the memory 720, to perform the following operations: receiving a CSI report, which is associated with multiple CSI-RS transmission occasions.

It can be seen that, in order to enhance the related configuration of CSI to adapt to the increasingly complex and diverse communication demands, the disclosure considers multiple CSI-RS transmission occasions, which can be the CSI-RS resources in the time-domain, and makes one CSI report associated with multiple CSI-RS transmission occasions, thereby enhancing the CSI configuration through resource association/resource configuration.

Since one CSI report is associated with multiple CSI-RS transmission occasions, a terminal device can perform channel measurement and/or interference measurement through these multiple CSI-RS transmission occasions to obtain more/new CSI parameters, and then report these more/new CSI parameters through this one CSI report. Furthermore, more/new CSI parameters will be beneficial to improving the accuracy of assessing the downlink-channel quality, thereby improving transmission performance and meeting complex and diverse transmission demands. It can be seen that the enhancement of the related configuration of CSI achieved by a CSI report associated with multiple CSI-RS transmission occasions will be beneficial to adapting to the increasingly complex and diverse communication demands.

It should be noted that the specific implementation of each operation can adopt the corresponding description of the above method embodiment, and the network device 700 can be used to execute the above method embodiment of the disclosure, and will not be repeated here.

X. Other Related Example Illustrations

In some possible implementations, the above method embodiments can be applied to a terminal device or within a terminal device. That is to say, the execution party the above method embodiments can be a terminal device, can be a chip, a chip module, or a module, etc., with no specific restrictions.

In some possible implementations, the above method embodiments can be applied to a network device or within a network device. That is to say, the execution party of the above method embodiments can be a network device, can be a chip, a chip module, or a module, etc., with no specific restrictions.

The embodiments of the disclosure also provide a chip, comprising a processor, a memory, and computer programs or instructions stored on the memory, wherein the processor executes the computer programs or instructions to implement the steps described in the above method embodiments.

The embodiments of the disclosure also provide a chip module, comprising a transceiver component and a chip, the chip comprising a processor, wherein the processor executes the computer programs or instructions to implement the steps described in the above method embodiments.

The embodiments of the disclosure also provide a computer-readable storage medium, which stores computer programs or instructions, which when executed, implement the steps described in the above method embodiments.

The embodiments of the disclosure also provide a computer program product, comprising computer programs or instructions, which when executed, implement the steps described in the above method embodiments.

The embodiments of the disclosure also provide a communication system, comprising the terminal device of the above and the network device.

It should be noted that for the above various embodiments, in order to simplify the description, they are all described as a series of actions. Those skilled in the art should know that the disclosure is not limited by the described order of actions, because some steps in the embodiments of the disclosure can be performed in other orders or simultaneously. In addition, those skilled in the art should also know that the embodiments described in the disclosure are all preferred embodiments, and the actions and modules involved are not necessarily required by the disclosure.

In the above embodiments, the description of each embodiment has its own focus, and the parts that are not described in detail in one embodiment can refer to the relevant descriptions of other embodiments.

The methods or algorithms described in the embodiments of the disclosure can be implemented in hardware, or can be implemented by a processor executing software instructions. Software instructions can be composed of corresponding software modules, and software modules can be stored in RAM, flash memory, ROM, EPROM, electrically erasable programmable read-only memory (EEPROM), registers, hard disks, mobile hard disks, CD-ROMs, or any other form of storage media known in the art. An exemplary storage medium is coupled to a processor, so that the processor can read information from and write information to the storage medium. Of course, the storage medium can also be an integral part of the processor. The processor and storage medium can be located in an ASIC. In addition, the ASIC can be located in a terminal device or a management device. Of course, the processor and storage medium can also exist as discrete components in a terminal device or a management device.

Those skilled in the art should be aware that in one or more of the above examples, the functions described in the embodiments of the disclosure can be fully or partially implemented in software, hardware, firmware, or any combination thereof. When implemented in software, it can be fully or partially implemented in the form of a computer program product. The computer program product includes one or more computer instructions. When the computer program instructions are loaded and executed on a computer, the processes or functions described in the embodiments of the disclosure are fully or partially generated. The computer can be a general-purpose computer, a dedicated computer, a computer network, or other programmable devices. The computer instructions can be stored in a computer-readable storage medium or transmitted from one computer-readable storage medium to another. For example, the computer instructions can be transmitted from a website, a computer, a server, or a data center to another website, a computer, a server, or a data center through wired (such as coaxial cable, optical fiber, digital subscriber line (DSL)) or wireless (such as infrared, wireless, microwave, etc.) means. The computer-readable storage medium can be any available medium that a computer can access, or a data storage device integrating one or more available media, such as a server, a data center, etc. The available medium can be a magnetic medium (such as a floppy disk, a hard disk, a magnetic tape), an optical medium (such as a digital video disc (DVD)), or a semiconductor medium (such as a solid-state disk (SSD)).

The various devices, products containing the various modules/units described in the above embodiments can be software modules/units, hardware modules/units, or a combination of part software modules/units and part hardware modules/units. For example, for devices/products applied to or integrated into chips, the various modules/units contained therein can all be realized in the form of circuits and other hardware, or at least part of the modules/units can be realized in the form of software programs, and the software programs run on the processor integrated inside the chip, and the remaining (if any) part of the modules/units can be realized in the form of circuits and other hardware; for devices/products applied to or integrated into chip modules, the various modules/units contained therein can all be realized in the form of circuits and other hardware, and different modules/units can be located in the same component (such as a chip, a circuit module, etc.) or different components of the chip module, or at least part of the modules/units can be realized in the form of software programs, and the software programs run on the processor integrated inside the chip module, and the remaining (if any) part of the modules/units can be realized in the form of circuits and other hardware; for devices/products applied to or integrated into terminal devices, the various modules/units contained therein can all be realized in the form of circuits and other hardware, and different modules/units can be located in the same component (such as a chip, a circuit module, etc.) or different components of the terminal device, or at least part of the modules/units can be realized in the form of software programs, and the software programs run on the processor integrated inside the terminal device, and the remaining (if any) part of the modules/units can be realized in the form of circuits and other hardware.

The specific implementation methods described above further elaborate on the purpose, technical solutions, and beneficial effects of the embodiments of the disclosure. It should be understood that the above descriptions are merely specific implementation methods of the embodiments of the disclosure and are not intended to limit the scope of protection of the disclosure. Any modifications, equivalent substitutions, improvements, etc., made within the spirit and principles of the disclosure should be included within the scope of protection of the disclosure.

## Claims

**1.** A method for transmitting a channel state information (CSI) report, comprising:
sending a CSI report, wherein the CSI report is associated with multiple channel state information reference signal (CSI-RS) transmission occasions.

**2.** The method of claim 1, wherein the multiple CSI-RS transmission occasions comprise multiple CSI-RS resources with different time-domain positions.

**3.** The method of claim 1, wherein the CSI report comprises at least one of:

predicted CSI parameters, multiple sets of CSI parameters, time-domain channel property information, wherein the predicted CSI parameters are CSI parameters corresponding to one or more transmission occasions after the multiple CSI-RS transmission occasions;
the multiple sets of CSI parameters are CSI parameters corresponding to the multiple CSI-RS transmission occasions; or
the time-domain channel property information is determined according to the multiple CSI-RS transmission occasions.

**4.** The method of claim 3, wherein the time-domain channel property information comprises at least one of: Doppler shift, Doppler spread, cross-correlation in time, relative Doppler shift, or differential Doppler shift.

**5.** The method of any one of claims 1 to 4, wherein the CSI report being associated with multiple CSI-RS transmission occasions is determined based on an association between a CSI report configuration and a CSI resource configuration, the CSI report configuration is used for configuring the CSI report, and the CSI resource configuration is used for configuring the CSI-RS transmission occasions.

**6.** The method of claim 5, wherein one CSI report configuration is associated with one CSI resource configuration, one CSI resource configuration comprises one CSI-RS resource set, and one CSI-RS resource set comprises one CSI-RS resource.

**7.** The method of claim 6, wherein the multiple CSI-RS transmission occasions comprise multiple repetitions of the CSI-RS resource in time-domain, and a time interval between adjacent repetitions of the CSI-RS resource is the same.

**8.** The method of claim 7, wherein the number of repetitions of the CSI-RS resource and/or the time interval between adjacent repetitions of the CSI-RS resource is indicated by at least one of radio resource control (RRC) signaling, medium access control (MAC) signaling, downlink control information (DCI).

9. The method of claim 7 or 8, wherein the time interval between adjacent repetitions of the CSI-RS resource is one or more indicated from multiple candidate values.

10. The method of claim 5, wherein one CSI report configuration is associated with one CSI resource configuration, one CSI resource configuration comprises one CSI-RS resource set, and one CSI-RS resource set comprises multiple CSI-RS resources.

11. The method of claim 10, wherein each CSI-RS resource comprised in the CSI-RS resource set has a different time-domain position, and the multiple CSI-RS transmission occasions comprise each CSI-RS resource comprised in the CSI-RS resource set.

12. The method of claim 11, wherein in response to a type of the CSI-RS resource set being periodic or semi-persistent, each CSI-RS resource comprised in the CSI-RS resource set having a different time-domain position comprises:
each CSI-RS resource comprised in the CSI-RS resource set has a same period and a different offset.

13. The method of claim 11, wherein in response to a type of the CSI-RS resource set being aperiodic, each CSI-RS resource comprised in the CSI-RS resource set having a different time-domain position comprises:
a first CSI-RS resource comprised in the CSI-RS resource set has an offset indicated by a network configuration or a protocol definition, and the rest of CSI-RS resources comprised in the CSI-RS resource set have time intervals indicated by the network configuration or by the protocol.

14. The method of claim 13, wherein the network configuration comprises at least one of RRC signaling, MAC signaling, or DCI.

15. The method of claim 5, wherein one CSI report configuration is associated with one CSI resource configuration, one CSI resource configuration comprises multiple CSI-RS resource sets, and each CSI-RS resource set comprises one CSI-RS resource.

16. The method of claim 15, wherein the CSI-RS resource comprised in each CSI-RS resource set has a different time-domain position;
the multiple CSI-RS transmission occasions comprise the CSI-RS resource comprised in each CSI-RS resource set.

17. The method of claim 16, wherein in response to the type of each CSI-RS resource set being periodic or semi-persistent, the CSI-RS resource comprised in each CSI-RS resource set having a different time-domain position comprises:
the CSI-RS resource comprised in each CSI-RS resource set has a same period and a different offset.

18. The method of claim 16, wherein in response to the type of each CSI-RS resource set being aperiodic, the CSI-RS resource comprised in each CSI-RS resource set having a different time-domain position comprises:
the CSI-RS resource comprised in each CSI-RS resource set has a different offset indicated by a network configuration or a protocol definition.

19. The method of claim 5, wherein one CSI report configuration is associated with multiple CSI resource configurations, and each CSI resource configuration comprises one CSI-RS resource set.

20. The method of claim 19, wherein in response to the CSI-RS resource set being not configured as a tracking reference signal (TRS), the CSI-RS resource set comprises one CSI-RS resource.

21. The method of claim 20, wherein the CSI-RS resource comprised in each CSI-RS resource set that is not configured as the TRS has a different time-domain position;
the multiple CSI-RS transmission occasions comprise the CSI-RS resource comprised in each CSI-RS resource set that is not configured as the TRS.

22. The method of claim 19, wherein in response to the CSI resource set being configured as the TRS, the CSI-RS resource set comprises multiple CSI-RS resources.

23. The method of claim 22, wherein each CSI-RS resource comprised in the CSI-RS resource set configured as the TRS has a different time-domain position, and the multiple CSI-RS transmission occasions comprise each CSI-RS resource comprised in the CSI-RS resource set configured as the TRS.

**24.** The method of any one of claims 5 to 23, wherein a codebook type comprised in the CSI resource configuration is Type 2.

**25.** A method for receiving a channel state information (CSI) report, comprising:
receiving a CSI report, wherein the CSI report is associated with channel state information reference signal (CSI-RS) transmission occasions.

**26.** The method of claim 25, wherein the multiple CSI-RS transmission occasions comprise multiple CSI-RS resources with different time-domain positions.

**27.** The method of claim 25, wherein the CSI report comprises at least one of:

predicted CSI parameters, multiple sets of CSI parameters, time-domain channel property information, wherein the predicted CSI parameters are CSI parameters corresponding to one or more transmission occasions after the multiple CSI-RS transmission occasions;
the multiple sets of CSI parameters are CSI parameters corresponding to the multiple CSI-RS transmission occasions; or
the time-domain channel property information is determined according to the multiple CSI-RS transmission occasions.

**28.** The method of claim 27, wherein the time-domain channel property information comprises at least one of: Doppler shift, Doppler spread, cross-correlation in time, relative Doppler shift, or differential Doppler shift.

**29.** The method of any one of claims 25 to 28, wherein the CSI report being associated with multiple CSI-RS transmission occasions is determined based on an association between a CSI report configuration and a CSI resource configuration, the CSI report configuration is used for configuring the CSI report, and the CSI resource configuration is used for configuring the CSI-RS transmission occasions.

**30.** The method of claim 29, wherein one CSI report configuration is associated with one CSI resource configuration, one CSI resource configuration comprises one CSI-RS resource set, and one CSI-RS resource set comprises one CSI-RS resource.

**31.** The method of claim 30, wherein the multiple CSI-RS transmission occasions comprise multiple repetitions of the CSI-RS resource in time-domain, and a time interval between adjacent repetitions of the CSI-RS resource is the same.

**32.** The method of claim 31, wherein the number of repetitions of the CSI-RS resource and/or the time interval between adjacent repetitions of the CSI-RS resource is indicated by at least one of radio resource control (RRC) signaling, medium access control (MAC) signaling, downlink control information (DCI).

**33.** The method of any one of claims 31 or 32, wherein the time interval between adjacent repetitions of the CSI-RS resource is one or more indicated from multiple candidate values.

**34.** The method of claim 29, wherein one CSI report configuration is associated with one CSI resource configuration, one CSI resource configuration comprises one CSI-RS resource set, and one CSI-RS resource set comprises multiple CSI-RS resources.

**35.** The method of claim 34, wherein each CSI-RS resource comprised in the CSI-RS resource set has a different time-domain position, and the multiple CSI-RS transmission occasions comprise each CSI-RS resource comprised in the CSI-RS resource set.

**36.** The method of claim 35, wherein in response to a type of the CSI-RS resource set being periodic or semi-persistent, each CSI-RS resource comprised in the CSI-RS resource set having a different time-domain position comprises:
each CSI-RS resource comprised in the CSI-RS resource set has a same period and a different offset.

**37.** The method of claim 35, wherein in response to a type of the CSI-RS resource set being aperiodic, each CSI-RS resource comprised in the CSI-RS resource set having a different time-domain position comprises:

a first CSI-RS resource comprised in the CSI-RS resource set has an offset indicated by a network configuration or a protocol definition, and the rest of CSI-RS resources comprised in the CSI-RS resource set have time intervals defined by the network configuration or by the protocol definition.

**38.** The method of claim 37, wherein the network configuration comprises at least one of RRC signaling, MAC signaling, or DCI.

**39.** The method of claim 29, wherein one CSI report configuration is associated with one CSI resource configuration, one CSI resource configuration comprises multiple CSI-RS resource sets, and each CSI-RS resource set comprises one CSI-RS resource.

**40.** The method of claim 39, wherein the CSI-RS resource comprised in each CSI-RS resource set has a different time-domain position;
the multiple CSI-RS transmission occasions comprise the CSI-RS resource comprised in each CSI-RS resource set.

**41.** The method of claim 40, wherein in response to the type of each CSI-RS resource set being periodic or semi-persistent, the CSI-RS resource comprised in each CSI-RS resource set having a different time-domain position comprises:
the CSI-RS resource comprised in each CSI-RS resource set has a same period and a different offset.

**42.** The method of claim 40, wherein in response to the type of each CSI-RS resource set being aperiodic, the CSI-RS resource comprised in each CSI-RS resource set having a different time-domain position comprises:
the CSI-RS resource comprised in each CSI-RS resource set has a different offset indicated by a network configuration or a protocol definition.

**43.** The method of claim 29, wherein one CSI report configuration is associated with multiple CSI resource configurations, and each CSI resource configuration comprises one CSI-RS resource set.

**44.** The method of claim 43, wherein in response to the CSI-RS resource set being not configured as a tracking reference signal (TRS), the CSI-RS resource set comprises one CSI-RS resource.

**45.** The method of claim 44, wherein the CSI-RS resource comprised in each CSI-RS resource set that is not configured as the TRS has a different time-domain position;
the multiple CSI-RS transmission occasions comprise the CSI-RS resource comprised in each CSI-RS resource set that is not configured as the TRS.

**46.** The method of claim 43, wherein in response to the CSI resource set being configured as the TRS, the CSI-RS resource set comprises multiple CSI-RS resources.

**47.** The method of claim 46, wherein each CSI-RS resource comprised in the CSI-RS resource set configured as the TRS has a different time-domain position, and the multiple CSI-RS transmission occasions comprise each CSI-RS resource comprised in the CSI-RS resource set configured as the TRS.

**48.** The method of any one of claims 29 to 47, wherein a codebook type comprised in the CSI resource configuration is Type 2.

**49.** An apparatus for transmitting a channel state information (CSI) report, comprising:
a sending unit, configured to send a CSI report, wherein the CSI report is associated with channel state information reference signal (CSI-RS) transmission occasions.

**50.** An apparatus for transmitting a channel state information (CSI) report, comprising:
a receiving unit, configured to receive a CSI report, wherein the CSI report is associated with channel state information reference signal (CSI-RS) transmission occasions.

**51.** A terminal device, comprising a processor, a memory, and computer programs or instructions stored in the memory, wherein the processor is configured to execute the computer programs or instructions to implement steps of the method of any one of claims 1 to 24.

**52.** A network device, comprising a processor, a memory, and computer programs or instructions stored in the memory, wherein the processor is configured to execute the computer programs or instructions to implement steps of the method of any one of claims 25 to 48.

**53.** A chip, comprising a processor and a communication interface, wherein the processor is configured to execute steps of the method of any one of claims 1 to 24 or 25 to 48.

**54.** A computer-readable storage medium, storing computer programs or instructions, which when executed, implement steps of the method of any one of claims 1 to 24 or 25 to 48.

110
120
10

FIG. 1

| R | Serving Cell ID | | | | | BWP ID | | Oct 1 |
|---|---|---|---|---|---|---|---|---|
| C1 | C2 | C3 | C4 | CSI Resource Set ID | | | | Oct 2 |

FIG. 2

TERMINAL DEVICE
NETWORK DEVICE
S310、CSI REPORT，THE CSI REPORT IS ASSOCIATED WITH MULTIPLE CSI-RS TRANSMISSION OCCASIONS

FIG. 3

400
APPARATUS FOR TRANSMITTING CSI REPORT
401
SENDING UNIT

FIG. 4

500
APPARATUS FOR TRANSMITTING CSI REPORT
501
RECEIVING UNIT

FIG. 5

TERMINAL DEVICE 600
PROCESSOR
610
MEMORY 620
COMPUTER PROGRAMS OR
INSTRUCTIONS 621

FIG. 6

NETWORK DEVICE 700
PROCESSOR
710
MEMORY 720
COMPUTER PROGRAMS OR
INSTRUCTIONS 721

FIG. 7

**INTERNATIONAL SEARCH REPORT**

International application No. **PCT/CN2023/110057**

**A. CLASSIFICATION OF SUBJECT MATTER**

H04W 24/10(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 信道状态信息, 报告, 配置, 资源, 关联, 多个, 参考信号, 传输, 时机, 时隙, 时间, 间隔, 时域, 位置, 偏移, CSI, report, config+, resource, associat+, plurality, RS, transmi+, tim+, slot, interval, time domain, offset

**C. DOCUMENTS CONSIDERED TO BE RELEVANT**

| Category* | Citation of document, with indication, where appropriate, of the relevant passages | Relevant to claim No. |
|---|---|---|
| PX | CN 116264475 A (HUAWEI TECHNOLOGIES CO., LTD.) 16 June 2023 (2023-06-16)<br>description, paragraphs [0096]-[0210] | 1-5, 25-29, 49-54 |
| X | CN 114503504 A (BEIJING XIAOMI MOBILE SOFTWARE CO., LTD.) 13 May 2022 (2022-05-13)<br>description, paragraphs [0049]-[0233] | 1-54 |
| X | CN 108616345 A (HUAWEI TECHNOLOGIES CO., LTD.) 02 October 2018 (2018-10-02)<br>description, paragraphs [0108]-[0220] | 1-54 |
| X | CN 113517965 A (VIVO MOBILE COMMUNICATION CO., LTD.) 19 October 2021 (2021-10-19)<br>description, paragraphs [0024]-[0130] | 1-54 |
| X | WO 2019136640 A1 (FUJITSU LTD. et al.) 18 July 2019 (2019-07-18)<br>description, page 6, line 10 to page 20 | 1-54 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 October 2023** | **09 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/110057**

| Patent document cited in search report | Publication date (day/month/year) | Patent family member(s) | Publication date (day/month/year) |
|---|---|---|---|
| CN 116264475 A | 16 June 2023 | None | |
| CN 114503504 A | 13 May 2022 | None | |
| CN 108616345 A | 02 October 2018 | None | |
| CN 113517965 A | 19 October 2021 | None | |
| WO 2019136640 A1 | 18 July 2019 | None | |

Form PCT/ISA/210 (patent family annex) (July 2022)